Europäisches Patentamt

European Patent Office

Office européen des brevets

(11) Numéro de publication: **0 502 771 B1**

# FASCICULE DE BREVET EUROPEEN

(45) Date de publication de fascicule du brevet: **26.04.95** (51) Int. Cl.⁶: **G01C 25/00**, F41G 5/20

(21) Numéro de dépôt: **92400529.1**

(22) Date de dépôt: **28.02.92**

(54) **Procédé et système d'harmonisation autonome d'équipements à bord d'un véhicule, utilisant des moyens de mesure des champs de gravité et magnétique terrestres.**

(30) Priorité: **07.03.91 FR 9102722**

(43) Date de publication de la demande:
**09.09.92 Bulletin 92/37**

(45) Mention de la délivrance du brevet:
**26.04.95 Bulletin 95/17**

(84) Etats contractants désignés:
**DE GB IT**

(56) Documents cités:
**EP-A- 0 383 043**
**DE-B- 1 236 806**
**GB-A- 1 128 516**
**US-A- 3 803 387**
**US-A- 4 134 681**

(73) Titulaire: **EUROCOPTER FRANCE**
**Aéroport International Marseille-Provence**
**F-13725 Marignane Cédex (FR)**

(72) Inventeur: **Germanetti, Serge Alexandre**
**26 rue Roger Brun**
**F-13006 Marseille (FR)**

(74) Mandataire: **Bonnetat, Christian et al**
**CABINET BONNETAT**
**23, Rue de St.Pétersbourg**
**F-75008 Paris (FR)**

EP 0 502 771 B1

## Description

La présente invention concerne un procédé, et un système en faisant application, permettant d'harmoniser de façon autonome un ou des équipements implantés à bord d'un véhicule. En particulier, et de façon non limitative, l'invention s'applique aux aéronefs.

On sait que certains équipements embarqués à bord d'un véhicule doivent avoir une orientation fixe par rapport à celui-ci; c'est en particulier le cas d'appareils de navigation par inertie, d'appareils de détection et de systèmes d'armes. L'ensemble de ces équipements doit fonctionner en utilisant des axes de référence communs, ce qui nécessite un calage initial de chacun de leurs axes de référence. Pour ce faire, il est défini un trièdre de référence du véhicule, qui sert de base de référence pour l'orientation de trièdres de référence relatifs aux divers équipements. Une telle opération de calage est appelée harmonisation ou alignement.

Diverses méthodes sont connues pour réaliser cette opération.

Une première méthode consiste à monter l'équipement à harmoniser sur un rack comportant une partie fixe, solidaire du véhicule, et une partie réglable solidaire de l'équipement, la position de cet équipement étant repérée par visée optique et modifiée par référence à une autre mesure optique portant sur un système de référence déjà harmonisé. Cette méthode sert usuellement pour l'harmonisation des centrales inertielles montées à bord d'aéronefs.

Une telle méthode est assez délicate à mettre en oeuvre car elle nécessite des moyens de visée externes au véhicule, et, par ailleurs, elle impose de pouvoir accéder optiquement aux équipements à harmoniser, ce qui est une contrainte importante pour le choix de leur emplacement.

Cette méthode détermine les angles d'erreur d'harmonisation de chaque équipement et nécessite ensuite de les corriger par une rotation mécanique. De ce fait, elle est longue et délicate à mettre en oeuvre.

Une autre méthode consiste à utiliser des plans de pose réalisés avec la précision voulue et harmonisés. Cela nécessite de positionner précisément un outillage par rapport au véhicule et ensuite de lui faire exécuter un usinage précis du plan de pose, qui est ainsi harmonisé. Ce plan de pose reçoit ensuite deux pions de centrage usinés avec précision, et sur lesquels l'équipement sera monté.

Cette méthode, qui utilise des transferts successifs de précision de positionnement mécanique, est lourde à mettre en oeuvre. En particulier, elle nécessite autant de plans de pose qu'il y a d'équipements à installer, et ceux-ci doivent aussi disposer de moyens de fixation usinés avec précision, ce qui en accroît le prix.

Une méthode plus sophistiquée, suivant le brevet français 2 610 101, consiste à disposer l'équipement dans un rack fixe et à effectuer la détermination de l'erreur d'harmonisation par comparaison entre un outillage, servant de référence pour définir les axes du véhicule, et un autre outillage provisoirement substitué à l'équipement à harmoniser. L'erreur d'harmonisation, qui est mémorisée dans la mémoire d'un calculateur du véhicule, sert par la suite à ce dernier pour corriger, par le calcul, les valeurs issues de l'équipement. Ce dernier doit évidemment avoir un dispositif de fixation précis et qui soit la recopie de celui de l'outillage qui a été substitué.

Cette méthode évite ainsi des réglages mécaniques, mais nécessite cependant une reproductibilité des moyens de fixation, ainsi que des mesures par visée optique.

Le brevet US-A- 4 134 681 décrit, de son côté, une méthode d'harmonisation utilisant deux rayons laser, par exemple, dont l'orientation de chacun est détectée par deux équipements, qui définissent les composantes de ces rayons sur leur trièdre propre. Un calculateur reçoit ces données et dispose de suffisamment d'équations pour déterminer les trois angles d'erreur entre ces deux équipements. L'un de ces équipements étant déjà harmonisé, l'erreur d'angle calculée est ainsi l'erreur d'harmonisation de l'autre équipement.

Une telle méthode évite ainsi un réglage mécanique, puisque le calculateur sera capable de corriger, par le calcul, les données fournies par l'équipement non harmonisé mécaniquement. Cependant, elle nécessite des mesures optiques, et impose donc des contraintes quant au positionnement des équipements.

La présente invention a pour objet de remédier à ces divers inconvénients et de permettre l'harmonisation d'équipements à bord d'un véhicule pourvu d'un calculateur recevant les données issues des divers équipements devant être harmonisés, en particulier un aéronef.

A cette fin, le procédé selon l'invention pour l'harmonisation d'un équipement par rapport à un véhicule, ledit équipement étant installé de façon fixe à bord dudit véhicule qui, par rapport à un premier système de référence RM absolu, a une orientation bien définie, par un deuxième système de référence R2 lié audit véhicule, ledit équipement étant soumis au champ de gravité terrestre représenté par un vecteur gravité $\vec{g}$

2

orienté selon son gradient, ainsi qu'au champ magnétique terrestre représenté par un vecteur $\vec{H}$ orienté selon son gradient, et l'orientation dudit équipement étant définie, par rapport audit premier système de référence RM absolu, par un troisième système de référence R3, cet équipement comportant un dispositif de mesure des composantes dudit vecteur gravité $\vec{g}$, fixé audit équipement; et ledit véhicule portant:

- un calculateur;
- une mémoire associée audit calculateur;
- un magnétomètre d'équipement, fixé audit véhicule, dont l'orientation, par rapport audit premier système de référence RM absolu, est repérée par un quatrième système de référence R4; et
- une première liaison reliant ledit équipement et le magnétomètre d'équipement audit calculateur et à ladite mémoire,

est remarquable en ce qu'il comporte la première série d'étapes suivantes:

- on dispose, de façon fixe à bord du véhicule, un outillage harmonisé par rapport à celui-ci, comparable audit équipement, ainsi qu'un magnétomètre outil harmonisé par rapport audit outillage, ledit outillage et ledit magnétomètre outil étant reliés audit calculateur et à ladite mémoire par une seconde liaison;
- on place le véhicule dans une première position fixe par rapport au sol, ce qui correspond à un premier positionnement R21 dudit deuxième système de référence R2 par rapport audit premier système de référence RM absolu;
- on mesure, avec l'outillage, les valeurs des composantes d'un vecteur $\vec{g}1$, représentant le champ de gravité terrestre $\vec{g}$ perçu par l'outillage dans le deuxième système de référence R2, et on transforme lesdites valeurs en données de gravité de référence, significatives desdites valeurs mesurées par l'outillage;
- on mesure, avec ledit magnétomètre outil, les valeurs des composantes d'un vecteur $\vec{H}1$, représentant le champ magnétique terrestre $\vec{H}$ perçu par ce magnétomètre outil dans le deuxième système de référence R2, et on transforme lesdites valeurs en données de magnétisme de référence, significatives desdites valeurs mesurées par le magnétomètre outil;
- on transmet à la mémoire, par ladite seconde liaison reliant l'outillage à ladite mémoire, et l'on y mémorise, lesdites données de gravité de référence, significatives desdites valeurs mesurées par l'outillage, ainsi que lesdites données de magnétisme de référence, significatives desdites valeurs mesurées par le magnétomètre outil;
- on mesure, avec ledit équipement, les valeurs des composantes d'un vecteur $\vec{g}2$, représentant le champ de gravité terrestre $\vec{g}$ perçu par ledit équipement dans le troisième système de référence R3, et on transforme lesdites valeurs en données de gravité mesurées, significatives desdites valeurs mesurées par ledit équipement;
- on mesure, avec ledit magnétomètre d'équipement, les valeurs des composantes d'un vecteur $\vec{H}2$, représentant le champ magnétique terrestre $\vec{H}$ perçu par ce magnétomètre d'équipement dans le quatrième système de référence R4, et on transforme lesdites valeurs en données de magnétisme mesurées, significatives desdites valeurs mesurées par le magnétomètre d'équipement;
- on transmet à la mémoire, par ladite première liaison, et l'on y mémorise, lesdites données de gravité mesurées, significatives desdites valeurs mesurées par ledit équipement, ainsi que lesdites données de magnétisme mesurées, significatives desdites valeurs mesurées par le magnétomètre d'équipement;
- on calcule, dans le calculateur, à partir desdites données de gravité de référence, desdites données de magnétisme de référence, desdites données de gravité mesurées, ainsi que desdites données de magnétisme mesurées, un premier opérateur de rotation $R1(\alpha,\beta,\Gamma)$ corrigeant, au moins pour la plus grande part, les erreurs angulaires d'harmonisation entre le deuxième système de référence R2 dudit véhicule et le troisième système de référence R3 dudit équipement selon les relations:

$$\alpha = \Phi1 - \Phi2$$
$$\beta = \theta1 - \theta2$$
$$\Gamma = \Omega1 - \Omega2 = 0$$

$\Phi1$, $\theta1$ et $\Omega1$ étant respectivement l'angle de roulis, l'angle d'assiette longitudinale et l'angle de cap du véhicule, déterminés par le calculateur à partir desdites données de gravité de référence et desdites données de magnétisme de référence,

et $\Phi2$, $\theta2$ et $\Omega2$ étant respectivement l'angle de roulis, l'angle d'assiette longitudinale et l'angle de cap de l'équipement, déterminés par le calculateur à partir desdites données de gravité mesurées et desdites données de magnétisme mesurées;

3

- on mémorise le premier opérateur de rotation R1($\alpha,\beta,\Gamma$) et on l'intègre au calculateur qui l'applique sur les angles $\Phi2$, $\theta2$, $\Omega2$ déterminés ultérieurement à partir de mesures ultérieures, donnant des données ultérieures de gravité mesurées, significatives de valeurs ultérieures mesurées par ledit équipement, ainsi que des données ultérieures de magnétisme mesurées, significatives de valeurs ultérieures mesurées par le magnétomètre d'équipement.

On peut ainsi déterminer avec une bonne précision, l'erreur d'harmonisation de l'équipement, sans qu'il y ait besoin d'y accéder par voie optique.

De même, pour déterminer l'erreur d'harmonisation de l'équipement, on peut effectuer une deuxième série d'étapes comportant les étapes suivantes:

- on dispose, de façon fixe à bord du véhicule, un outillage harmonisé par rapport à celui-ci, comparable audit équipement, ainsi qu'un magnétomètre outil harmonisé par rapport audit outillage, ledit outillage et ledit magnétomètre outil étant reliés audit calculateur et à ladite mémoire par une seconde liaison;

- on place le véhicule dans une première position fixe par rapport au sol, ce qui correspond à un premier positionnement R21 dudit deuxième système de référence R2 par rapport audit premier système de référence RM absolu;

- on mesure, avec l'outillage, les valeurs des composantes d'un vecteur $\vec{g}1$, représentant le champ de gravité terrestre $\vec{g}$ perçu par l'outillage dans le deuxième système de référence R2, et on transforme lesdites valeurs en données de gravité de référence, significatives desdites valeurs mesurées par l'outillage;

- on mesure, avec ledit magnétomètre outil, les valeurs des composantes d'un vecteur $\vec{H}1$, représentant le champ magnétique terrestre $\vec{H}$ perçu par ce magnétomètre outil dans le deuxième système de référence R2, et on transforme lesdites valeurs en données de magnétisme de référence, significatives desdites valeurs mesurées par le magnétomètre outil;

- on transmet à la mémoire, par ladite seconde liaison reliant l'outillage à ladite mémoire, et l'on y mémorise, lesdites données de gravité de référence, significatives desdites valeurs mesurées par l'outillage, ainsi que lesdites données de magnétisme de référence, significatives desdites valeurs mesurées par le magnétomètre outil;

- on mesure, avec ledit équipement, les valeurs des composantes d'un vecteur $\vec{g}2$, représentant le champ de gravité terrestre $\vec{g}$ perçu par ledit équipement dans le troisième système de référence R3, et on transforme lesdites valeurs en données de gravité mesurées, significatives desdites valeurs mesurées par ledit équipement;

- on mesure, avec ledit magnétomètre d'équipement, les valeurs des composantes d'un vecteur $\vec{H}2$, représentant le champ magnétique terrestre $\vec{H}$ perçu par ce magnétomètre d'équipement dans le quatrième système de référence R4, et on transforme lesdites valeurs en données de magnétisme mesurées, significatives desdites valeurs mesurées par le magnétomètre d'équipement;

- on transmet à la mémoire, par ladite première liaison, et l'on y mémorise, lesdites données de gravité mesurées, significatives desdites valeurs mesurées par ledit équipement, ainsi que lesdites données de magnétisme mesurées, significatives desdites valeurs mesurées par le magnétomètre d'équipement;

- on calcule, dans le calculateur, à partir desdites données de gravité de référence, desdites données de magnétisme de référence, desdites données de gravité mesurées, ainsi que desdites données de magnétisme mesurées, un premier opérateur de rotation R1($\alpha,\beta,\Gamma$) corrigeant, au moins pour la plus grande part, les erreurs angulaires d'harmonisation entre le deuxième système de référence R2 dudit véhicule et le troisième système de référence R3 dudit équipement selon la relation:

$$\left| \begin{array}{c} \vec{g}1 \\ \vec{H}1 \end{array} \right| = \left| \begin{array}{cc} R1(\alpha,\beta,\Gamma) & 0 \\ 0 & R1(\alpha,\beta,\Gamma) \end{array} \right| \times \left| \begin{array}{c} \vec{g}2 \\ \vec{H}2 \end{array} \right|$$

- on mémorise le premier opérateur de rotation R1($\alpha,\beta,\Gamma$) et on l'intègre au calculateur qui l'applique sur des angles $\Phi2$, $\theta2$, $\Omega2$ déterminés ultérieurement à partir de mesures ultérieures, donnant des données ultérieures de gravité mesurées, significatives de valeurs ultérieures mesurées par ledit équipement, ainsi que des données ultérieures de magnétisme mesurées, significatives de valeurs ultérieures mesurées par le magnétomètre d'équipement;

4

- on mémorise les angles $\Phi1$, $\theta1$, $\Omega1$, d'une part, et les angles $\Phi2$, $\theta2$, $\Omega2$ d'autre part, $\Phi1$, $\theta1$ et $\Omega1$ étant respectivement l'angle de roulis, l'angle d'assiette longitudinale et l'angle de cap du véhicule, déterminés par le calculateur à partir desdites données de gravité de référence et desdites données de magnétisme de référence, et $\Phi2$, $\theta2$ et $\Omega2$ étant respectivement l'angle de roulis, l'angle d'assiette longitudinale et l'angle de cap de l'équipement, déterminés par le calculateur à partir desdites données de gravité mesurées et desdites données de magnétisme mesurées.

On détermine ainsi, sans visée optique, les corrections d'harmonisation à apporter à l'équipement.

Lesdites corrections sont encore améliorées en faisant suivre ladite première ou deuxième séries d'étapes d'une troisième série d'étapes comportant les étapes suivantes:

- on met le véhicule en mouvement non rectiligne;
- on mesure en différents instants, et on mémorise dans la mémoire, une pluralité de valeurs des composantes du champ magnétique $\vec{H}2$ perçu par le magnétomètre d'équipement selon le quatrième système de référence R4, avec des orientations différentes du véhicule;
- on calcule, dans le calculateur, à partir de ladite pluralité de valeurs des composantes du champ magnétique $\vec{H}2$ perçu par le magnétomètre d'équipement, mesurée à l'étape précédente, un opérateur correctif OC définissant les corrections à appliquer aux composantes des divers vecteurs champ magnétique $\vec{H}2$ mesurées dans toutes les étapes précédentes par le magnétomètre d'équipement, pour corriger les perturbations magnétiques de fers durs et de fers doux et l'erreur d'orientation, entre le troisième système de référence R3 dudit équipement et le quatrième système de référence R4 dudit magnétomètre d'équipement;
- on transforme, par application dudit opérateur correctif OC, les composantes des divers vecteurs champ magnétique $\vec{H}2$, mesurées dans toutes les étapes précédentes par le magnétomètre d'équipement, en des composantes de vecteurs champ magnétique $\vec{H}2c$ corrigées, remplaçant, pour les calculs ultérieurs, les composantes des vecteurs champ magnétique $\vec{H}2$ correspondants;
- on calcule, dans le calculateur, à partir desdites données de gravité de référence, desdites données de magnétisme de référence, desdites données de gravité mesurées, ainsi que desdites données de magnétisme mesurées, correspondant aux mesures effectuées au sol, et pour lesquelles les composantes du vecteur champ magnétique $\vec{H}2$ représentant le champ magnétique perçu par ledit magnétomètre d'équipement sont remplacées par les composantes du vecteur magnétique corrigé $\vec{H}2c$, les angles d'erreur $\alpha$, $\beta$, $\Gamma$ définissant un deuxième opérateur de rotation $R2(\alpha,\beta,\Gamma)$, en lieu et place dudit premier opérateur de rotation $R1(\alpha,\beta,\Phi)$, entre le deuxième système de référence R2 dudit véhicule et le troisième système de référence R3 dudit équipement, les angles $\alpha$, $\beta$, $\Gamma$ étant solutions du système d'équations:

$$\left| \begin{array}{c} \vec{g1} \\ \vec{H1} \end{array} \right| = \left| \begin{array}{cc} R2(\alpha,\beta,\Gamma) & 0 \\ 0 & R2(\alpha,\beta,\Gamma) \end{array} \right| \times \left| \begin{array}{c} \vec{g2} \\ \vec{H2c} \end{array} \right|$$

- on mémorise le deuxième opérateur de rotation $R2(\alpha,\beta,\Gamma)$ et on l'intègre au calculateur qui l'applique sur les angles $\Phi2$, $\theta2$, $\Omega2$ déterminés ultérieurement à partir de mesures ultérieures, donnant des données ultérieures de gravité mesurées, significatives de valeurs ultérieures mesurées par l'équipement, ainsi que des données ultérieures de magnétisme mesurées, significatives de valeurs ultérieures mesurées par le magnétomètre d'équipement.

De cette façon, l'erreur d'harmonisation subsistante peut encore être réduite et être affranchie des champs magnétiques perturbateurs et de l'erreur d'harmonisation du magnétomètre d'équipement.

En particulier, le procédé peut présenter la caractéristique d'avoir lesdites données de gravité de référence et lesdites données de magnétisme de référence, d'une part, lesdites données de gravité mesurées et lesdites données de magnétisme mesurées, d'autre part, correspondant aux mesures effectuées au sol, qui soient respectivement représentatives des angles $\Phi1$, $\theta1$, $\Omega1$, d'une part, et $\Phi2$, $\theta2$, $\Omega2$, d'autre part.

Ainsi, les valeurs des différents angles sont directement disponibles pour les calculs ultérieurs.

Par ailleurs, le procédé, appliqué à une pluralité de M (M: entier positif) équipements à harmoniser, chacun ayant des premier et deuxième opérateurs de rotation $R1(\alpha i,\beta i,\Gamma i)$ et $R2(\alpha i,\beta i,\Gamma i)$ ainsi qu'un opérateur correctif OCi propres (avec i = 1 à M), est remarquable en ce que la pluralité de premiers et deuxièmes opérateurs de rotation $R1(\alpha i,\beta i,\Gamma i)$, $R2(\alpha i,\beta i,\Gamma i)$ et d'opérateurs correctifs OCi est déterminée simultanément, à partir des mesures effectuées par les divers équipements et magnétomètres d'équipement et par un outillage et un magnétomètre outil.

On peut ainsi, par une seule série d'étapes, réaliser l'harmonisation d'une pluralité d'équipements, donc sans accroissement du temps nécessaire.

Par ailleurs, certains équipements peuvent comporter des interfaces de dialogue, ce qui offre une plus grande souplesse pour l'harmonisation.

De plus, le procédé permet d'utiliser une mémoire unique.

Toutes les données sont ainsi regroupées et plus facilement accessibles.

De même, le procédé ne nécessite qu'un calculateur unique.

Ainsi, ce calculateur peut traiter toutes les données, sans avoir à effectuer des échanges avec d'autres calculateurs, ce qui permet d'effectuer plus rapidement les calculs.

D'autre part, le procédé présente l'intérêt de pouvoir être associé aux étapes suivantes:
- on mesure, avec l'équipement, des données relatives à des orientations supplémentaires du véhicule au sol;
- on transmet au calculateur, par la première liaison, lesdites données relatives auxdites orientations supplémentaires du véhicule au sol;
- on calcule, dans le calculateur, un troisième opérateur de rotation R3($\alpha,\beta,\Gamma$), utilisé, en lieu et place dudit deuxième opérateur de rotation R2($\alpha,\beta,\Gamma$), pour corriger les erreurs d'harmonisation de, ou des, équipement(s).

On peut ainsi améliorer encore la précision de la correction d'harmonisation.

De plus, le procédé selon l'invention permet d'utiliser un outillage qui est constitué par l'appareil du type de l'équipement le plus performant.

On dispose ainsi de valeurs de référence ayant la meilleure précision possible.

Le procédé selon l'invention permet d'utiliser, de plus, des données, issues de l'outillage ou d'au moins un équipement, relatives à la vitesse et / ou à l'accélération dudit véhicule (1).

Par ailleurs, le système selon l'invention, pour l'harmonisation d'un équipement, installé de façon fixe à bord d'un véhicule, par rapport audit véhicule qui, par rapport à un premier système de référence RM absolu, a une orientation définie par un deuxième système de référence R2 lié audit véhicule, ledit équipement étant soumis au champ de gravité terrestre représenté par un vecteur gravité $\vec{g}$ orienté selon son gradient, ainsi qu'au champ magnétique terrestre représenté par un vecteur $\vec{H}$ orienté selon son gradient, et l'orientation dudit équipement étant définie, par rapport audit premier système de référence RM absolu, par un troisième système de référence R3,
est remarquable en ce que cet équipement comporte un dispositif de mesure des composantes dudit vecteur gravité $\vec{g}$, fixé audit équipement; et en ce que ledit véhicule porte:
- un magnétomètre d'équipement, fixé audit véhicule, dont l'orientation, par rapport audit premier système de référence RM absolu, est repérée par un quatrième système de référence R4;
- un calculateur;
- une mémoire associée audit calculateur; et
- une première liaison reliant l'équipement et le magnétomètre d'équipement audit calculateur et à ladite mémoire.

Le système présente l'intérêt d'être autonome et d'être extensible en nombre d'équipements à harmoniser.

De plus, le système selon l'invention peut comporter au moins outillage ou au moins un équipement fournissant, de plus, des données relatives à la vitesse et / ou à l'accélération dudit véhicule.

Ces données permettent d'affiner continuellement la précision des mesures.

Les figures du dessin annexé feront bien comprendre comment l'invention peut être réalisée. Sur ces figures, des références identiques désignent des éléments identiques ou semblables.

La figure 1 représente schématiquement un véhicule, dans lequel est implanté un équipement à harmoniser.

La figure 2 représente des systèmes de référence d'orientation, permettant de repérer les divers appareils.

La figure 3 illustre la généralisation de ce procédé d'harmonisation au cas d'une pluralité de M (M: entier positif) équipements à harmoniser.

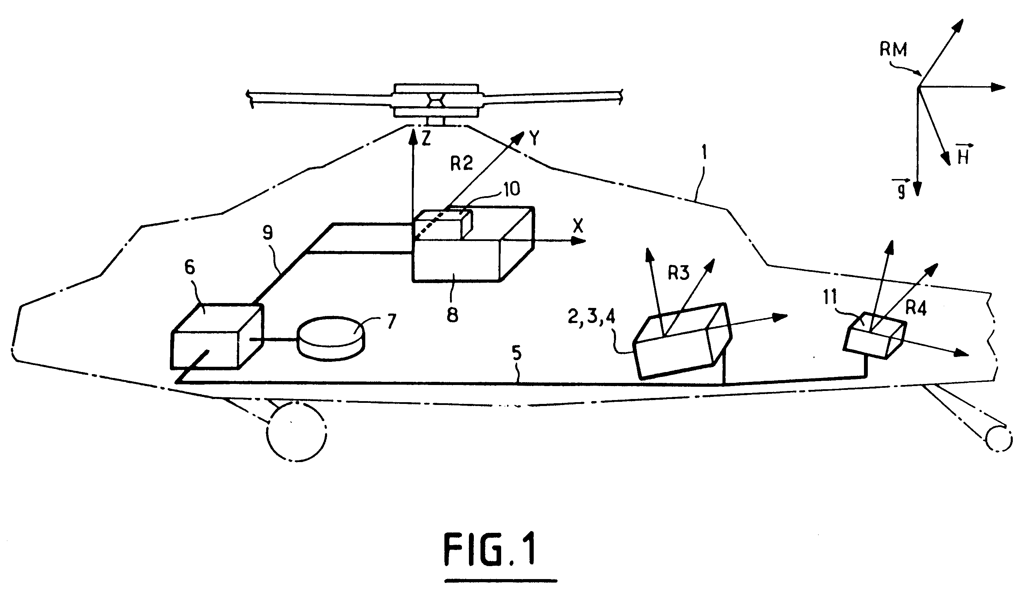

Un véhicule 1 est représenté schématiquement, à la figure 1, sous la forme d'un hélicoptère, dans lequel est implanté un équipement 2 devant être harmonisé vis-à-vis de cet hélicoptère. Cet équipement 2 comporte un dispositif de mesure des composantes du gradient de champ de gravité, qui définit la verticale, sous forme d'un bloc accélérométrique 3 ou d'un bloc gyrométrique 4, ou des deux. Une première liaison 5 relie l'équipement 2 à un calculateur 6 et à une mémoire 7 associée. Par ailleurs, un outillage 8 déjà harmonisé, comprenant un équipement comparable à l'équipement 2, est aussi implanté dans le véhicule 1. Une seconde liaison 9 permet de relier l'outillage 8 à la mémoire 7, à travers le calculateur 6. De plus, un magnétomètre outil 10, lui-aussi harmonisé, est implanté de façon rigide dans le véhicule 1, et est relié par la seconde liaison 9 à la mémoire 7, tandis qu'un magnétomètre d'équipement 11 non harmonisé est aussi implanté de façon rigide dans le véhicule 1 et est relié à la mémoire 7 par la première liaison 5.

L'équipement 2 et l'outillage 8 peuvent mesurer, dans un système de référence d'orientation qui est propre à chacun et lui est lié de façon fixe, les composantes d'une grandeur physique orientée et d'amplitude constante localement, représentée par un vecteur, tel le vecteur $\vec{g}$ orienté selon le gradient du champ de gravité terrestre, et qui définit la verticale. Chacun des magnétomètres est apte à mesurer, dans un système de référence d'orientation qui est propre à chacun et lui est lié de façon fixe, les composantes d'une grandeur physique magnétique orientée et d'amplitude constante localement, représentée par un vecteur, tel le vecteur $\vec{H}$ orienté selon le gradient du champ magnétique terrestre.

L'orientation des systèmes de référence est définie de la façon suivante. Il est défini un premier système de référence RM absolu, servant de référence d'orientation absolue pour d'autres systèmes de référence. Un deuxième système de référence R2 est lié de façon fixe au véhicule 1 et définit l'orientation de ce dernier par rapport au premier système de référence RM absolu. Un troisième système de référence R3 est lié de façon fixe à l'équipement 2 et définit l'orientation de ce dernier par rapport au premier système de référence RM absolu. Un quatrième système de référence R4 est lié de façon fixe au magnétomètre d'équipement 11 et définit l'orientation de ce dernier par rapport au premier système de référence RM absolu. De façon préférée, ces systèmes de référence sont constitués de trièdres tri-rectangles.

Les deux systèmes de référence R2 et R3 présentent une erreur d'harmonisation qui peut être représentée par un opérateur de rotation $R(\alpha,\beta,\Gamma)$ défini à partir des angles d'Euler permettant de passer d'un système de référence à l'autre, comme cela est expliqué ci-dessous. Cet opérateur de rotation $R(\alpha,\beta,\Gamma)$ constitue un opérateur représentant l'erreur d'harmonisation de l'équipement 2, et qui permet, en l'appliquant aux composantes du vecteur mesurées par cet équipement 2, de calculer des valeurs correspondantes de composantes de ce vecteur non entachées de l'erreur d'harmonisation.

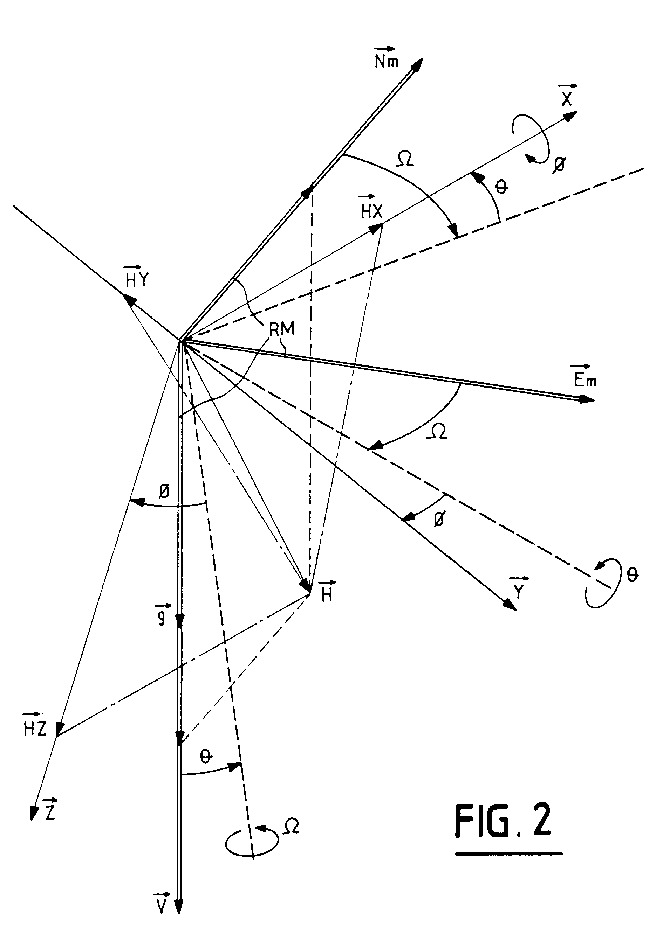

Comme le montre la figure 2, en utilisant la direction du champ magnétique local $\vec{H}$ et du gradient de la gravité terrestre $\vec{g}$, on peut définir le premier système de référence RM absolu, constitué, par exemple, d'axes définissant un trièdre tri-rectangle local, formé par un axe $\vec{V}$ parallèle au gradient du champ de gravité terrestre, orienté vers le centre de la Terre, et donnant la verticale locale, par un axe horizontal $\vec{N}$m, donnant le nord magnétique, et par un troisième axe $\vec{E}$m donnant l'Est magnétique. Le gradient du champ de gravité, représenté par le vecteur $\vec{g}$, est colinéaire avec l'axe $\vec{V}$, tandis que le champ magnétique local, représenté par un vecteur $\vec{H}$, est contenu dans le plan défini par les axes $\vec{V}$ et $\vec{N}$m, et a donc respectivement une composante selon ces deux axes $\vec{V}$ et $\vec{N}$m.

Si l'on définit un deuxième trièdre d'axes $\vec{X}$ $\vec{Y}$ $\vec{Z}$, représentant le deuxième système de référence du véhicule 1, dans lequel s'effectuent les mesures des trois composantes $\vec{H}X$, $\vec{H}Y$, $\vec{H}Z$ de ce même vecteur $\vec{H}$, le passage de l'un à l'autre de ces trièdres de référence RM et $\vec{X}$ $\vec{Y}$ $\vec{Z}$ nécessite trois rotations successives définies par des angles d'Euler définis comme;

$\Omega$:     angle de cap magnétique

$\theta$:     angle d'assiette longitudinale

$\Phi$:     angle de roulis

Ces trois rotations s'écrivent selon la matrice classique des angles d'Euler:

$$R(\Phi,\theta,\Omega) =$$

$$\begin{vmatrix} \cos\Omega\,\cos\theta & \cos\Omega\,\sin\theta\,\sin\Phi - \sin\Omega\,\cos\Phi & \sin\Omega\,\sin\Phi + \cos\Omega\,\sin\theta\,\cos\Phi \\ \sin\Omega\,\cos\theta & \cos\Omega\,\cos\Phi + \sin\Omega\,\sin\theta\,\sin\Phi & \sin\Omega\,\sin\theta\,\cos\Phi - \cos\Omega\,\sin\Phi \\ -\sin\theta & \cos\theta\,\sin\Phi & \cos\theta\,\cos\Phi \end{vmatrix}$$

Le premier système de référence RM absolu peut alors servir de référence locale pour chacun des appareils cités ci-dessus, c'est-à-dire l'équipement 2, l'outillage 8, le magnétomètre outil 10 et le magnétomètre d'équipement 11. L'équipement 2 et l'outillage 8 sont aptes à mesurer les composantes du vecteur gradient de la gravité, tandis que le magnétomètre outil 10 et le magnétomètre d'équipement 11 peuvent mesurer les composantes du vecteur champ magnétique sur les axes de leur propre système de référence, l'existence d'écarts entre les mesures des trois composantes d'un même vecteur par deux

EP 0 502 771 B1

appareils semblables étant révélatrice d'une erreur d'orientation entre leurs systèmes de référence. Ainsi, les composantes mesurées selon les axes du système de référence de l'appareil considéré peuvent être exprimées par des relations trigonométriques simples à partir de l'amplitude de ce vecteur et de l'angle qu'il fait avec chacun des axes, ce qui permet ainsi de déterminer cet angle. Si les composantes de ce même vecteur, mesurées dans le trièdre de l'autre appareil qui effectue le même type de mesure, ne sont pas identiques, il suffit de faire tourner le trièdre de référence de ce dernier jusqu'à obtenir l'égalité des composantes homologues dans les deux trièdres, ce qui est effectué sous forme d'une correction mathématique simulant l'effet d'une rotation physique des trièdres de référence. Il faut cependant disposer de suffisamment d'équations pour pouvoir déterminer la valeur des angles traduisant l'erreur d'orientation du troisième système de référence R3 de l'équipement 2 à harmoniser par rapport au deuxième système de référence R2 du véhicule 1, ce qui est exposé ci-dessous.

Afin d'établir un dialogue entre l'outillage 8 et l'équipement 2 à harmoniser, ce dernier comporte une entrée lui permettant de recevoir de l'extérieur les références absolues sur lesquelles il doit s'harmoniser.

L'harmonisation s'effectue en position fixe, le véhicule 1 étant posé au sol suivant des angles $\Phi 1$, $\theta 1$, $\Omega 1$ connus dans le premier système de référence RM absolu, mesurés par l'outillage 8 qui comporte une centrale inertielle au moins aussi précise que celle à harmoniser, et le magnétomètre outil 10. Comme indiqué précédemment, l'outillage 8 est préalablement harmonisé au moyen, par exemple, de l'une des méthodes indiquées initialement, ce qui fournit ainsi la référence $\Phi 1$, $\theta 1$, $\Omega 1$ de l'orientation du véhicule 1. Le magnétomètre outil 10 a un système de référence orienté comme le deuxième système de référence du véhicule 1; il est donc aussi défini par les angles $\Phi 1$, $\theta 1$, $\Omega 1$ dans le premier système de référence RM absolu.

Cela amène à effectuer le début d'une première suite d'étapes suivantes:
- on mesure, avec l'outillage 8, les valeurs des composantes d'un vecteur $\vec{g}1$, représentant le champ de gravité terrestre $\vec{g}$ perçu par l'outillage 8 dans le deuxième système de référence R2, et on transforme lesdites valeurs en données de gravité de référence, significatives desdites valeurs mesurées par l'outillage 8;
- on mesure, avec ledit magnétomètre outil 10, les valeurs des composantes d'un vecteur $\vec{H}1$, représentant le champ magnétique terrestre $\vec{H}$ perçu par ce magnétomètre outil 10 dans le deuxième système de référence R2, et on transforme lesdites valeurs en données de magnétisme de référence, significatives desdites valeurs mesurées par le magnétomètre outil 10;
- on transmet à la mémoire 7, par la seconde liaison 9 reliant l'outillage 8 à ladite mémoire 7, et l'on y mémorise, lesdites données de gravité de référence, significatives desdites valeurs mesurées par l'outillage 8, ainsi que lesdites données de magnétisme de référence, significatives desdites valeurs mesurées par le magnétomètre outil 10;

Simultanément, on mémorise les mesures $\Phi 2$ et $\theta 2$ de l'équipement 2, ainsi que les composantes du champ magnétique $\vec{H}2$ du magnétomètre d'équipement 11, associé à cet équipement 2, et l'angle de cap $\Omega 2$ mesuré.

Cela amène à poursuivre les étapes de ladite première suite, par les étapes suivantes:
- on mesure, avec l'équipement 2, les valeurs des composantes d'un vecteur $\vec{g}2$, représentant le champ de gravité terrestre $\vec{g}$ perçu par l'équipement 2 dans le troisième système de référence R3, et on transforme lesdites valeurs en données de gravité mesurées, significatives desdites valeurs mesurées par l'équipement 2;
- on mesure, avec ledit magnétomètre d'équipement 11, les valeurs des composantes d'un vecteur $\vec{H}2$, représentant le champ magnétique terrestre $\vec{H}$ perçu par ce magnétomètre d'équipement 11 dans le quatrième système de référence R4, et on transforme lesdites valeurs en données de magnétisme mesurées, significatives desdites valeurs mesurées par le magnétomètre d'équipement 11;
- on transmet à la mémoire 7, par ladite première liaison 5, et l'on y mémorise, lesdites données de gravité mesurées, significatives desdites valeurs mesurées par l'équipement 2, ainsi que lesdites données de magnétisme mesurées, significatives desdites valeurs mesurées par le magnétomètre d'équipement 11.

On peut exprimer le vecteur champ magnétique $\vec{H}$ en fonction du vecteur champ magnétique $\vec{H}1$ perçu par le magnétomètre outil 10:

$$\vec{H} = R(\Phi 1, \theta 1, \Omega 1) \times \vec{H}1$$

l'opérateur de rotation $R(\Phi 1, \theta 1, \Omega 1)$ faisant tourner le deuxième système de référence R2 de façon à le faire coïncider avec le premier système de référence RM absolu.

8

Ce champ magnétique $\vec{H}1$ est légèrement différent du champ $\vec{H}$ du fait de la présence de perturbations magnétiques, créées par le véhicule 1 et qui seront explicitées plus loin.

Pour ce qui est des mesures relatives à la gravité, le vecteur $\vec{g}$, exprimant le gradient du champ de la pesanteur, est, de même, tel que:

$$\vec{g} \quad = \quad R(\Phi1,\theta1,\Omega1) \quad x \quad \vec{g}1$$

ce qui, dans le premier système de référence RM absolu, s'exprime sous la forme:

$$\begin{vmatrix} 0 \\ 0 \\ g \end{vmatrix} = g \quad x \ R(\Phi1,\theta1,\Omega1) \ x \begin{vmatrix} -\sin\theta1 \\ \sin\Phi1 \quad \cos\theta1 \\ \cos\Phi1 \quad \cos\theta1 \end{vmatrix}$$

les composantes de $\vec{g}1$ étant celles du vecteur gravité terrestre mesurées par l'outillage 8. Comme l'équipement 2 est supposé avoir une erreur d'harmonisation définie par l'opérateur de rotation $R(\alpha,\beta,\Gamma)$ entre les axes de son système de référence R3 et les axes correspondants du système de référence R2 du véhicule 1, les vecteurs $\vec{g}1$ et $\vec{g}2$ sont liés par l'opérateur de rotation $R(\alpha,\beta,\Gamma)$ de façon telle que:

$$\vec{g}1 \quad = \quad R(\alpha,\beta,\Gamma) \quad x \quad \vec{g}2$$

soit, exprimé par leurs composantes:

$$\begin{vmatrix} -\sin\theta1 \\ \sin\Phi1 \quad \cos\theta1 \\ \cos\Phi1 \quad \cos\theta1 \end{vmatrix} = R(\alpha,\beta,\Gamma) \ x \begin{vmatrix} -\sin\theta2 \\ \sin\Phi2 \quad \cos\theta2 \\ \cos\Phi2 \quad \cos\theta2 \end{vmatrix}$$

La relation ci-dessus est applicable quel que soit le cap de la centrale outillage 8: les angles $\Phi1$ et $\theta1$ sont donc toujours indépendants de l'angle $\Omega1$. Pour la même raison, $\Phi2$ et $\theta2$ ne sont pas liés à l'angle $\Omega2$, d'ailleurs incorrect puisque le champ magnétique $\vec{H}2$ n'est pas corrigé des perturbations indiquées précédemment, ni de l'erreur d'harmonisation du magnétomètre d'équipement 11. En conséquence, l'angle $\Gamma$, ou erreur en cap de l'équipement 2 par rapport au véhicule 1, ne peut être obtenu par la relation ci-dessus, équivalente à deux équations à trois inconnues.

Une première minimisation de l'erreur de cap peut cependant être entreprise en utilisant les résultats bruts des précédentes mesures.

Deux solutions sont possibles pour éliminer les erreurs majeures sur les angles $\alpha$, $\beta$, $\Gamma$ et permettre un premier vol dans des conditions acceptables, l'outillage 8 et le magnétomètre outil 10 étant retirés:
- la première solution consiste à admettre que le magnétomètre d'équipement 11 n'a pas d'erreur d'harmonisation en cap (erreur de 1 à 2 degrés, par exemple), d'où:

$$\alpha = \Phi1 - \Phi2 + \Sigma1$$
$$\beta = \theta1 - \theta2 + \Sigma2$$

$\Sigma1$ et $\Sigma2$ étant des infiniment petits si les angles d'assiette longitudinale et de roulis sont faibles: on admettra donc, pour cette approximation, que $\Sigma1$ et $\Sigma2$ sont nuls.
- la seconde revient à négliger les effets des perturbations magnétiques et de l'erreur d'harmonisation du magnétomètre d'équipement 11 sur le champ $\vec{H}2$, auquel cas on déduit $\alpha$, $\beta$, $\Gamma$ des équations suivantes:

$$\left| \begin{array}{c} \vec{g} \\ \vec{H} \end{array} \right| = \left| \begin{array}{cc} R & 0 \\ 0 & R \end{array} \right| \times \left| \begin{array}{c} \vec{g2} \\ \vec{H2} \end{array} \right|$$

avec

$$R = R(\Phi 1, \theta 1, \Omega 1) \times R1(\alpha, \beta, \Gamma)$$

relation où $\vec{g}$ et $\vec{H}$ désignent respectivement le gradient du champ de gravité et le gradient du champ magnétique absolu, déduits des mesures initiales effectuées avec l'outillage 8 et le magnétomètre outil 10 et l'équipement 2 et le magnétomètre d'équipement 11, et $R1(\alpha, \beta, \Gamma)$ désigne un premier opérateur de rotation de valeur voisine de celle de l'opérateur de rotation $R(\alpha, \beta, \Gamma)$.

Avec seulement une position du véhicule 1, l'équation ci-dessus équivaut à un système de trois équations à trois inconnues, pouvant aussi s'écrire:

$$\left| \begin{array}{c} \vec{g1} \\ \vec{H1} \end{array} \right| = \left| \begin{array}{cc} R1(\alpha, \beta, \Gamma) & 0 \\ 0 & R1(\alpha, \beta, \Gamma) \end{array} \right| \times \left| \begin{array}{c} \vec{g2} \\ \vec{H2} \end{array} \right|$$

qui exprime implicitement que les angles entre les vecteurs $\vec{g}$ et $\vec{H}$ dans les systèmes de référence R2, R3 et R4 sont conservés, d'où une équation indépendante en moins.

On mémorise alors le premier opérateur de rotation $R1(\alpha, \beta, \Gamma)$ et on l'intègre au calculateur 6 qui l'applique sur les angles $\Phi 2$, $\theta 2$, $\Omega 2$ déterminés ultérieurement à partir de mesures ultérieures, donnant des données ultérieures de gravité mesurées, significatives de valeurs ultérieures mesurées par l'équipement 2, ainsi que des données ultérieures de magnétisme mesurées, significatives de valeurs ultérieures mesurées par le magnétomètre d'équipement 11.

Par ailleurs, il convient de corriger l'effet de perturbations magnétiques faussant les mesures fournies par le magnétomètre d'équipement 11. Ceci est effectué au moyen de procédures d'autocompensation et de surcompensation, qui vont être expliquées.

Les perturbations magnétiques qui se produisent sont essentiellement:

- les perturbations de fers durs: effets des aimantations rémanentes dans les matériaux ferro magnétiques et leurs champs créés par les courants continus. Elles se modélisent par un vecteur $\vec{b}$.
- les perturbations de fers doux: effets des déformations des lignes de champ magnétique dues à l'inhomogénéité de perméabilité magnétique du véhicule 1. Elles se modelisent par une matrice $|K|^{-1}$.

Il en résulte l'expression suivante:

$$\vec{H2} = |K|^{-1} \times \vec{H2c} + \vec{b}$$

où $\vec{H2}$ et $\vec{H2c}$ désignent respectivement le vecteur du champ magnétique mesuré par le magnétomètre d'équipement 11 et le vecteur magnétique corrigé qui en est déduit.

Si l'on considère le vecteur $\vec{H2c}$ par rapport au véhicule 1 mobile selon les trois angles définissant son orientation, l'extrémité de $\vec{H2c}$ a théoriquement pour lieu géométrique local une sphère centrée à l'origine du vecteur $\vec{H2c}$. Les perturbations décrites ci-dessus transforment cette sphère en un ellipsoide et translatent son centre par rapport à celui de la sphère.

Les corrections d'autocompensation et de surcompensation effectuées, en général, lors de vols en configuration de virages et à différents angles d'assiette longitudinale et de roulis du véhicule, ont pour objet de ramener tout point de l'ellipsoïde sur la sphère théorique, c'est-à-dire de réaliser l'opération:

$$\vec{H2c} = |K| \ ( \ \vec{H2} - \vec{b})$$

Pour ce faire, lors des vols d'autocompensation et de surcompensation, il est établi une base de données associant les composantes mesurées de $\vec{H2}$ et les informations $\Phi$ et $\theta$, de l'équipement 2 et du magnétomètre d'équipement 11. A partir de là, on dispose de suffisamment de relations entre ces mesures pour déterminer la forme de l'ellipsoide défini par l'extrémité du vecteur $\vec{H2}$, ce qui permet d'en définir le centre et, par là, son décalage par rapport à sa position théorique, ce qui définit le vecteur $\vec{b}$. Ensuite, l'ellipsoïde est transformé, par le calcul, en une sphère, dont le rayon a l'amplitude recherchée du champ magnétique corrigé $\vec{H}2c$, ce qui est traduit en la matrice $|K|$ qui permet d'obtenir les composantes du vecteur magnétique corrigé $\vec{H}2c$ à partir du vecteur magnétique mesuré $\vec{H}2$. La précision des calculs est évidemment d'autant meilleure qu'il y a plus de mesures.

Il est à remarquer que la correction ci-dessus corrige aussi l'erreur d'harmonisation du magnétomètre d'équipement 11, puisque les perturbations ci-dessus mentionnées ont un effet qui n'est pas discernable de celui de l'erreur d'harmonisation.

Ainsi, le procédé peut être complété par une deuxième série d'étapes, comportant les étapes suivantes:

- on met le véhicule 1 en mouvement non rectiligne;
- on mesure en différents instants, et on mémorise dans la mémoire 7, une pluralité de valeurs des composantes du champ magnétique $\vec{H}2$ perçu par le magnétomètre d'équipement 11 selon le quatrième système de référence R4, avec des orientations différentes du véhicule 1;
- on calcule, dans le calculateur 6, à partir de ladite pluralité de valeurs des composantes du champ magnétique $\vec{H}2$ perçu par le magnétomètre d'équipement 11, mesurée à l'étape précédente, un opérateur correctif OC définissant les corrections à appliquer aux composantes des divers vecteurs champ magnétique $\vec{H}2$ mesurées dans toutes les étapes précédentes par le magnétomètre d'équipement 11, pour corriger les perturbations magnétiques de fers durs et de fers doux et l'erreur d'orientation, entre le troisième système de référence R3 dudit équipement 2 et le quatrième système de référence R4 dudit magnétomètre d'équipement 11;
- on transforme, par application dudit opérateur correctif OC, les composantes des divers vecteurs champ magnétique $\vec{H}2$, mesurées dans toutes les étapes précédentes par le magnétomètre d'équipement 11, en des composantes de vecteurs champ magnétique $\vec{H}2c$ corrigées, remplaçant, pour les calculs ultérieurs, les composantes des vecteurs champ magnétique $\vec{H}2$ correspondants;
- on calcule, dans le calculateur 6, à partir desdites données de gravité de référence, desdites données de magnétisme de référence, desdites données de gravité mesurées, ainsi que desdites données de magnétisme mesurées, correspondant aux mesures effectuées au sol, et pour lesquelles les composantes du vecteur champ magnétique $\vec{H}2$ représentant le champ magnétique perçu par ledit magnétomètre d'équipement 11 sont remplacées par les composantes du vecteur magnétique corrigé $\vec{H}2c$, les angles d'erreur $\alpha$, $\beta$, $\Gamma$ définissant un deuxième opérateur de rotation $R2(\alpha,\beta,\Gamma)$ entre le deuxième système de référence R2 dudit véhicule 1 et le troisième système de référence R3 dudit équipement 2, les angles $\alpha$, $\beta$, $\Gamma$ étant solutions du système d'équations:

$$\begin{vmatrix} \vec{g1} \\ \vec{H1} \end{vmatrix} = \begin{vmatrix} R2(\alpha,\beta,\Gamma) & 0 \\ 0 & R2(\alpha,\beta,\Gamma) \end{vmatrix} \times \begin{vmatrix} \vec{g2} \\ \vec{H2c} \end{vmatrix}$$

- on mémorise le deuxième opérateur de rotation $R2(\alpha,\beta,\Gamma)$ et on l'intègre au calculateur 6 qui l'applique sur les angles $\Phi2$, $\theta2$, $\Omega2$ déterminés ultérieurement à partir de mesures ultérieures, donnant des données ultérieures de gravité mesurées, significatives de valeurs ultérieures mesurées par l'équipement 2, ainsi que des données ultérieures de magnétisme mesurées, significatives de valeurs ultérieures mesurées par le magnétomètre d'équipement 11.

Ces opérations ne sont à réaliser qu'une seule fois, excepté évidemment à la suite d'un déplacement de l'équipement 2. Dans le cas d'une modification de l'environnement magnétique (emport ou largage de corps métalliques), les angles d'erreur $\alpha,\beta,\Gamma$ demeurent inchangés, mais la procédure d'autocompensation et de surcompensation est à refaire afin de recalculer les corrections correspondantes.

L'opérateur de rotation $R2(\alpha,\beta,\Gamma)$ étant calculé, celui-ci sera intégré au niveau de l'ensemble de l'installation de navigation, de façon à corriger les mesures fournies par la centrale des quantités $\alpha,\beta,\Gamma$. Par conséquent, le procédé a pour résultat, après l'obtention du premier ou deuxième opérateur de rotation R1-$(\alpha,\beta,\Gamma)$ ou $R2(\alpha,\beta,\Gamma)$, de rendre quasi-égales, ou égales, les mesures des angles $\Phi$, $\theta$, $\Omega$ dans le deuxième système de référence R2 du véhicule 1 et dans le troisième système de référence R3 de l'équipement 2.

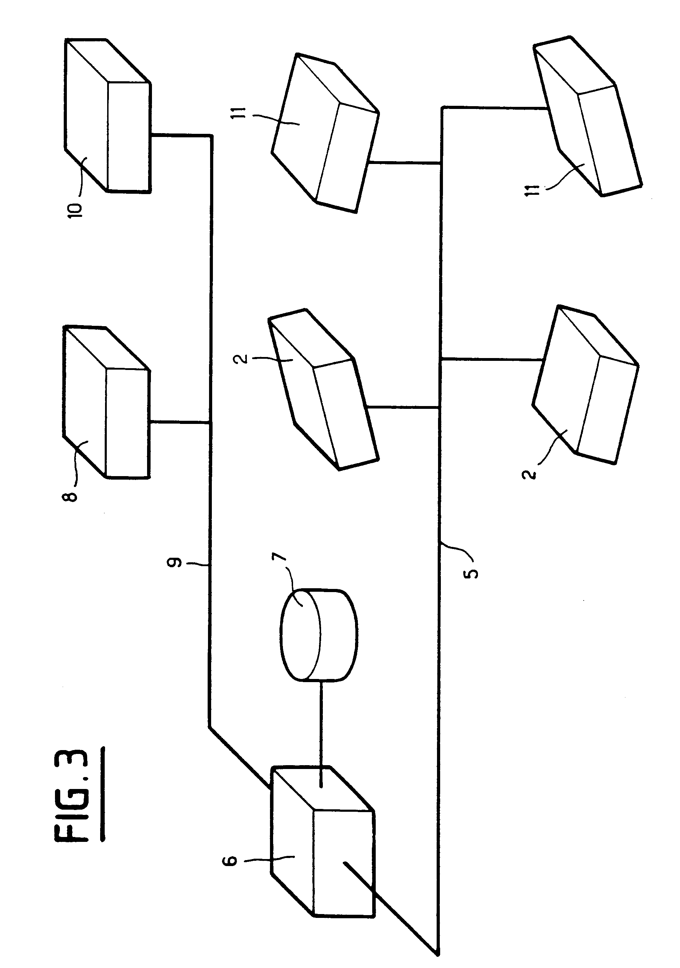

La figure 3 illustre la généralisation de ce procédé d'harmonisation au cas d'une pluralité de M (M: entier positif) équipements 2 à harmoniser, chacun ayant des premier et deuxième opérateurs de rotation R1($\alpha i,\beta i,\Gamma i$) et R2($\alpha i,\beta i,\Gamma i$) ainsi qu'un opérateur correctif OCi propre (avec i = 1 à N). En effet, dans ce cas il est possible d'effectuer simultanément les opérations précédemment décrites et de calculer simultanément la pluralité de premiers et deuxièmes opérateurs de rotation R1($\alpha i,\beta i,\Gamma i$), R2($\alpha i,\beta i,\Gamma i$) et d'opérateurs

correctifs OCi, à partir des mesures effectuées par les divers équipements 2 et magnétomètres d'équipement 11 et par un seul outillage 8 et un seul magnétomètre outil 10.

On peut utiliser plusieurs magnétomètres d'équipement 11 ou un seul, auquel cas l'incertitude d'harmonisation entre eux disparaît.

Par ailleurs, certains équipements 2 peuvent comporter des interfaces de dialogue, ce qui offre une plus grande souplesse pour l'harmonisation.

En particulier, on peut utiliser des sorties de l'équipement 2 le plus performant, par exemple des sorties relatives à la vitesse et / ou à l'accélération du véhicule 1, pour améliorer l'homogénéité des mesures des autres équipements 2 et identifier les rotations de ces derniers par rapport à l'outillage 8 de référence, ou encore par rapport audit équipement 2 le plus performant, préalablement harmonisé, qui est utilisé en lieu et place dudit outillage 8 de référence.

De plus, le procédé peut être amélioré en effectuant les étapes suivantes au sol:

- on mesure, avec l'équipement 2, le magnétomètre d'équipement 11, l'outillage 8 et le magnétomètre outil 10, des données relatives aux orientations supplémentaires au sol du véhicule 1, complétant les données homologues relatives à l'orientation initiale;
- on transmet au calculateur 6 lesdites données relatives aux orientations du véhicule 1 au sol et aux orientations du véhicule 1 en vol, ces dernières données permettant de corriger les mesures du champ magnétique, comme expliqué précédemment;
- on calcule, dans le calculateur 6, un troisième opérateur de rotation R3($\alpha,\beta,\Gamma$), utilisé, en lieu et place du deuxième opérateur de rotation R2($\alpha,\beta,\Gamma$), pour corriger les erreurs d'harmonisation de, ou des, équipement(s) 2.

Cela permet ainsi de continuer à intégrer des résultats de mesure, de façon à diminuer l'influence de l'erreur de chaque mesure.

## Revendications

**1.** Procédé pour l'harmonisation d'un équipement (2) par rapport à un véhicule (1), ledit équipement (2) étant installé de façon fixe à bord dudit véhicule (1) qui, par rapport à un premier système de référence (RM) absolu, a une orientation définie par un deuxième système de référence (R2) lié audit véhicule (1), ledit équipement (2) étant soumis au champ de gravité terrestre représenté par un vecteur gravité $\vec{g}$ orienté selon son gradient, ainsi qu'au champ magnétique terrestre représenté par un vecteur $\vec{H}$ orienté selon son gradient, et l'orientation dudit équipement (2) étant définie, par rapport audit premier système de référence (RM) absolu, par un troisième système de référence (R3), cet équipement (2) comportant un dispositif de mesure (3, 4) des composantes dudit vecteur gravité $\vec{g}$, fixé audit équipement (2);

et ledit véhicule (1) portant:

- un calculateur (6);
- une mémoire (7) associée audit calculateur (6);
- un magnétomètre d'équipement (11), fixé audit véhicule (1), dont l'orientation, par rapport audit premier système de référence (RM) absolu, est repérée par un quatrième système de référence (R4); et
- une première liaison (5) reliant ledit équipement (2) et le magnétomètre d'équipement (11) audit calculateur (6) et à ladite mémoire (7),

    caractérisé en ce qu'il comporte la première série d'étapes suivantes:

- on dispose, de façon fixe à bord du véhicule (1), un outillage (8) harmonisé par rapport à celui-ci, comparable audit équipement (2), ainsi qu'un magnétomètre outil (10) harmonisé par rapport audit outillage (8), ledit outillage (8) et ledit magnétomètre outil (10) étant reliés audit calculateur (6) et à ladite mémoire (7) par une seconde liaison (9);
- on place le véhicule (1) dans une première position fixe par rapport au sol, ce qui correspond à un premier positionnement (R21) dudit deuxième système de référence (R2) par rapport audit premier système de référence (RM) absolu;
- on mesure, avec l'outillage (8), les valeurs des composantes d'un vecteur $\vec{g}1$, représentant le champ de gravité terrestre $\vec{g}$ perçu par l'outillage (8) dans le deuxième système de référence (R2), et on transforme lesdites valeurs en données de gravité de référence, significatives desdites valeurs mesurées par l'outillage (8);
- on mesure, avec ledit magnétomètre outil (10), les valeurs des composantes d'un vecteur $\vec{H}1$, représentant le champ magnétique terrestre $\vec{H}$ perçu par ce magnétomètre outil (10) dans le deuxième système de référence (R2), et on transforme lesdites valeurs en données de magnétisme de référence, significatives desdites valeurs mesurées par le magnétomètre outil (10);

- on transmet à la mémoire (7), par ladite seconde liaison (9) reliant l'outillage (8) à ladite mémoire (7), et l'on y mémorise, lesdites données de gravité de référence, significatives desdites valeurs mesurées par l'outillage (8), ainsi que lesdites données de magnétisme de référence, significatives desdites valeurs mesurées par le magnétomètre outil (10);

- on mesure, avec ledit équipement (2), les valeurs des composantes d'un vecteur $\vec{g}2$, représentant le champ de gravité terrestre $\vec{g}$ perçu par ledit équipement (2) dans le troisième système de référence (R3), et on transforme lesdites valeurs en données de gravité mesurées, significatives desdites valeurs mesurées par ledit équipement (2);

- on mesure, avec ledit magnétomètre d'équipement (11), les valeurs des composantes d'un vecteur $\vec{H}2$, représentant le champ magnétique terrestre $\vec{H}$ perçu par ce magnétomètre d'équipement (11) dans le quatrième système de référence (R4), et on transforme lesdites valeurs en données de magnétisme mesurées, significatives desdites valeurs mesurées par le magnétomètre d'équipement (11);

- on transmet à la mémoire (7), par ladite première liaison (5), et l'on y mémorise, lesdites données de gravité mesurées, significatives desdites valeurs mesurées par ledit équipement (2), ainsi que lesdites données de magnétisme mesurées, significatives desdites valeurs mesurées par le magnétomètre d'équipement (11);

- on calcule, dans le calculateur (6), à partir desdites données de gravité de référence, desdites données de magnétisme de référence, desdites données de gravité mesurées, ainsi que desdites données de magnétisme mesurées, un premier opérateur de rotation R1($\alpha,\beta,\Gamma$) corrigeant, au moins pour la plus grande part, les erreurs angulaires d'harmonisation entre le deuxième système de référence (R2) dudit véhicule (1) et le troisième système de référence (R3) dudit équipement (2) selon les relations:

$$\alpha = \Phi1 - \Phi2$$
$$\beta = \theta1 - \theta2$$
$$\Gamma = \Omega1 - \Omega2 = 0$$

$\Phi1$, $\theta1$ et $\Omega1$ étant respectivement l'angle de roulis, l'angle d'assiette longitudinale et l'angle de cap du véhicule (1), déterminés par le calculateur (6) à partir desdites données de gravité de référence et desdites données de magnétisme de référence,

et $\Phi2$, $\theta2$ et $\Omega2$ étant respectivement l'angle de roulis, l'angle d'assiette longitudinale et l'angle de cap de l'équipement (2), déterminés par le calculateur (6) à partir desdites données de gravité mesurées et desdites données de magnétisme mesurées;

- on mémorise le premier opérateur de rotation R1($\alpha,\beta,\Gamma$) et on l'intègre au calculateur (6) qui l'applique sur des angles $\Phi2$, $\theta2$, $\Omega2$ déterminés ultérieurement à partir de mesures ultérieures, donnant des données ultérieures de gravité mesurées, significatives de valeurs ultérieures mesurées par ledit équipement (2), ainsi que des données ultérieures de magnétisme mesurées, significatives de valeurs ultérieures mesurées par le magnétomètre d'équipement (11).

2. Procédé pour l'harmonisation d'un équipement (2) par rapport à un véhicule (1), ledit équipement (2) étant installé de façon fixe à bord dudit véhicule (1) qui, par rapport à un premier système de référence (RM) absolu, a une orientation définie par un deuxième système de référence (R2) lié audit véhicule (1), ledit équipement (2) étant soumis au champ de gravité terrestre représenté par un vecteur gravité $\vec{g}$ orienté selon son gradient, ainsi qu'au champ magnétique terrestre représenté par un vecteur $\vec{H}$ orienté selon son gradient, et l'orientation dudit équipement (2) étant définie, par rapport audit premier système de référence (RM) absolu, par un troisième système de référence (R3), cet équipement (2) comportant un dispositif de mesure (3, 4) des composantes dudit vecteur gravité $\vec{g}$, fixé audit équipement (2);
et ledit véhicule (1) portant:

- un calculateur (6);
- une mémoire (7) associée audit calculateur (6);
- un magnétomètre d'équipement (11), fixé audit véhicule (1), dont l'orientation, par rapport audit premier système de référence (RM) absolu, est repérée par un quatrième système de référence (R4); et
- une première liaison (5) reliant ledit équipement (2) et le magnétomètre d'équipement (11) audit calculateur (6) et à ladite mémoire (7),

caractérisé en ce qu'il comporte la deuxième série d'étapes suivantes:

- on dispose, de façon fixe à bord du véhicule (1), un outillage (8) harmonisé par rapport à celui-ci, comparable audit équipement (2), ainsi qu'un magnétomètre outil (10) harmonisé par rapport audit outillage (8), ledit outillage (8) et ledit magnétomètre outil (10) étant reliés audit calculateur (6) et à ladite mémoire (7) par une seconde liaison (9);
- on place le véhicule (1) dans une première position fixe par rapport au sol, ce qui correspond à un premier positionnement (R21) dudit deuxième système de référence (R2) par rapport audit premier système de référence (RM) absolu;
- on mesure, avec l'outillage (8), les valeurs des composantes d'un vecteur $\vec{g}1$, représentant le champ de gravité terrestre $\vec{g}$ perçu par l'outillage (8) dans le deuxième système de référence (R2), et on transforme lesdites valeurs en données de gravité de référence, significatives desdites valeurs mesurées par l'outillage (8);
- on mesure, avec ledit magnétomètre outil (10), les valeurs des composantes d'un vecteur $\vec{H}1$, représentant le champ magnétique terrestre $\vec{H}$ perçu par ce magnétomètre outil (10) dans le deuxième système de référence (R2), et on transforme lesdites valeurs en données de magnétisme de référence, significatives desdites valeurs mesurées par le magnétomètre outil (10);
- on transmet à la mémoire (7), par ladite seconde liaison (9) reliant l'outillage (8) à ladite mémoire (7), et l'on y mémorise, lesdites données de gravité de référence, significatives desdites valeurs mesurées par l'outillage (8), ainsi que lesdites données de magnétisme de référence, significatives desdites valeurs mesurées par le magnétomètre outil (10);
- on mesure, avec ledit équipement (2), les valeurs des composantes d'un vecteur $\vec{g}2$, représentant le champ de gravité terrestre $\vec{g}$ perçu par ledit équipement (2) dans le troisième système de référence (R3), et on transforme lesdites valeurs en données de gravité mesurées, significatives desdites valeurs mesurées par ledit équipement (2);
- on mesure, avec ledit magnétomètre d'équipement (11), les valeurs des composantes d'un vecteur $\vec{H}2$, représentant le champ magnétique terrestre $\vec{H}$ perçu par ce magnétomètre d'équipement (11) dans le quatrième système de référence (R4), et on transforme lesdites valeurs en données de magnétisme mesurées, significatives desdites valeurs mesurées par le magnétomètre d'équipement (11);
- on transmet à la mémoire (7), par ladite première liaison (5), et l'on y mémorise, lesdites données de gravité mesurées, significatives desdites valeurs mesurées par ledit équipement (2), ainsi que lesdites données de magnétisme mesurées, significatives desdites valeurs mesurées par le magnétomètre d'équipement (11);
- on calcule, dans le calculateur (6), à partir desdites données de gravité de référence, desdites données de magnétisme de référence, desdites données de gravité mesurées, ainsi que desdites données de magnétisme mesurées, un premier opérateur de rotation R1($\alpha,\beta,\Gamma$) corrigeant, au moins pour la plus grande part, les erreurs angulaires d'harmonisation entre le deuxième système de référence (R2) dudit véhicule (1) et le troisième système de référence (R3) dudit équipement (2) selon la relation:

$$
\begin{vmatrix} \vec{g}1 \\ \vec{H}1 \end{vmatrix} = \begin{vmatrix} R1(\alpha,\beta,\Gamma) & 0 \\ 0 & R1(\alpha,\beta,\Gamma) \end{vmatrix} \times \begin{vmatrix} \vec{g}2 \\ \vec{H}2 \end{vmatrix}
$$

- on mémorise le premier opérateur de rotation R1($\alpha,\beta,\Gamma$) et on l'intègre au calculateur (6) qui l'applique sur des angles $\Phi2$, $\theta2$, $\Omega2$ déterminés ultérieurement à partir de mesures ultérieures, donnant des données ultérieures de gravité mesurées, significatives de valeurs ultérieures mesurées par ledit équipement (2), ainsi que des données ultérieures de magnétisme mesurées, significatives de valeurs ultérieures mesurées par le magnétomètre d'équipement (11).
- on mémorise les angles $\Phi1$, $\theta1$, $\Omega1$, d'une part, et les angles $\Phi2$, $\theta2$, $\Omega2$ d'autre part, $\Phi1$, $\theta1$ et $\Omega1$ étant respectivement l'angle de roulis, l'angle d'assiette longitudinale et l'angle de cap du véhicule (1), déterminés par le calculateur (6) à partir desdites données de gravité de référence et desdites données de magnétisme de référence, et $\Phi2$, $\theta2$ et $\Omega2$ étant respectivement l'angle de roulis, l'angle d'assiette longitudinale et l'angle de cap de l'équipement (2), déterminés par le calculateur (6) à partir desdites données de gravité mesurées et desdites données de magnétisme mesurées.

3. Procédé selon la revendication 1 ou 2, caractérisé en ce que ladite première ou deuxième série d'étapes est suivie d'une troisième série d'étapes comportant les étapes suivantes:
   - on met le véhicule (1) en mouvement non rectiligne;
   - on mesure en différents instants, et on mémorise dans la mémoire (7), une pluralité de valeurs des composantes du champ magnétique $\vec{H}2$ perçu par le magnétomètre d'équipement (11) selon le quatrième système de référence (R4), avec des orientations différentes du véhicule (1);
   - on calcule, dans le calculateur (6), à partir de ladite pluralité de valeurs des composantes du champ magnétique $\vec{H}2$ perçu par le magnétomètre d'équipement (11), mesurée à l'étape précédente, un opérateur correctif (OC) définissant les corrections à appliquer aux composantes des divers vecteurs champ magnétique $\vec{H}2$ mesurées dans toutes les étapes précédentes par le magnétomètre d'équipement (11), pour corriger les perturbations magnétiques de fers durs et de fers doux et l'erreur d'orientation entre le troisième système de référence (R3) dudit équipement (2) et le quatrième système de référence (R4) dudit magnétomètre d'équipement (11);
   - on transforme, par application dudit opérateur correctif (OC), les composantes des divers vecteurs champ magnétique $\vec{H}2$, mesurées dans toutes les étapes précédentes par le magnétomètre d'équipement (11), en des composantes de vecteurs champ magnétique $\vec{H}2c$ corrigées, remplaçant, pour les calculs ultérieurs, les composantes des vecteurs champ magnétique $\vec{H}2$ correspondants :
   - on calcule, dans le calculateur (6), à partir desdites données de gravité de référence, desdites données de magnétisme de référence, desdites données de gravité mesurées, ainsi que desdites données de magnétisme mesurées, correspondant aux mesures effectuées au sol, et pour lesquelles les composantes du vecteur champ magnétique $\vec{H}2$ représentant le champ magnétique perçu par ledit magnétomètre d'équipement (11) sont remplacées par les composantes du vecteur magnétique corrigé $\vec{H}2c$, les angles d'erreur $\alpha$, $\beta$, $\Gamma$ définissant un deuxième opérateur de rotation R2($\alpha,\beta,\Gamma$) entre le deuxième système de référence (R2) dudit véhicule (1) et le troisième système de référence (R3) dudit équipement (2), les angles $\alpha$, $\beta$, $\Gamma$ étant solutions du système d'équations:

$$
\begin{vmatrix} \vec{g}1 \\ \vec{H}1 \end{vmatrix} = \begin{vmatrix} R2(\alpha,\beta,\Gamma) & 0 \\ 0 & R2(\alpha,\beta,\Gamma) \end{vmatrix} \times \begin{vmatrix} \vec{g}2 \\ \vec{H}2c \end{vmatrix}
$$

   - on mémorise ce deuxième opérateur de rotation R2($\alpha,\beta,\Gamma$) et on l'intègre au calculateur (6) qui l'applique sur des angles $\Phi2$, $\theta2$, $\Omega2$ déterminés ultérieurement à partir de mesures ultérieures, donnant des données ultérieures de gravité mesurées, significatives de valeurs ultérieures mesurées par ledit équipement (2), ainsi que des données ultérieures de magnétisme mesurées, significatives de valeurs ultérieures mesurées par le magnétomètre d'équipement (11).

4. Procédé selon la revendication 3, caractérisé en ce que lesdites données de gravité de référence et lesdites données de magnétisme de référence, d'une part, lesdites données de gravité mesurées et lesdites données de magnétisme mesurées, d'autre part, correspondant aux mesures effectuées au sol, sont respectivement représentatives des angles $\Phi1$, $\theta1$, $\Omega1$, d'une part, et $\Phi2$, $\theta2$, $\Omega2$, d'autre part.

5. Procédé selon l'une quelconque des revendications 1 à 4, appliqué à une pluralité de M (M: entier positif) équipements (2) à harmoniser par rapport audit véhicule (1), chacun ayant des premiers et deuxièmes opérateurs de rotation R1($\alpha i,\beta i,\Gamma i$) et R2($\alpha i,\beta i,\Gamma i$) ainsi qu'un opérateur correctif (OCi) propres (avec i = 1 à M), caractérisé en ce que la pluralité de premiers et deuxièmes opérateurs de rotation R1($\alpha i,\beta i,\Gamma i$), R2($\alpha i,\beta i,\Gamma i$) et d'opérateurs correctifs (OCi) est déterminée simultanément, à partir des mesures effectuées par les divers équipements (2) et magnétomètres d'équipement (11) et par un outillage (8) et un magnétomètre outil (10).

6. Procédé selon la revendication 4, caractérisé en ce que la mémoire (7) est unique.

7. Procédé selon la revendication 4 ou 5, caractérisé en ce que le calculateur (6) est unique.

8. Procédé selon l'une quelconque des revendications 1 à 7, caractérisé en ce que:

- on mesure au sol, avec ledit équipement (2), ledit magnétomètre d'équipement (11), ledit outillage (8) et ledit magnétomètre outil (10), des données relatives aux orientations supplémentaires au sol du véhicule (1), complétant les données homologues relatives à l'orientation initiale au sol;
- on transmet au calculateur (6), lesdites données relatives à l'ensemble des orientations du véhicule (1) au sol et en vol;
- on calcule, dans le calculateur (6), un troisième opérateur de rotation R3($\alpha,\beta,\Gamma$), utilisé, en lieu et place dudit deuxième opérateur de rotation R2($\alpha,\beta,\Gamma$), pour corriger les erreurs d'harmonisation de, ou des, équipement(s) (2).

9. Procédé selon l'une quelconque des revendications 1 à 8, caractérisé en ce que l'outillage (8) est constitué par l'appareil du type de l'équipement (2) le plus performant.

10. Procédé selon l'une quelconque des revendications 1 à 9, caractérisé en ce qu'on utilise, de plus, des données, issues de l'outillage (8) ou d'au moins un équipement (2), relatives à la vitesse et / ou à l'accélération dudit véhicule (1).

11. Système pour l'harmonisation d'un équipement (2) par rapport à un véhicule (1), ledit équipement (2) étant installé de façon fixe à bord dudit véhicule (1) qui, par rapport à un premier système de référence (RM) absolu, a une orientation définie par un deuxième système de référence (R2) lié audit véhicule (1), ledit équipement (2) étant soumis au champ de gravité terrestre représenté par un vecteur gravité $\vec{g}$ orienté selon son gradient, ainsi qu'au champ magnétique terrestre représenté par un vecteur $\vec{H}$ orienté selon son gradient, et l'orientation dudit équipement (2) étant définie, par rapport audit premier système de référence (RM) absolu, par un troisième système de référence (R3), caractérisé en ce que ledit équipement (2) comporte un dispositif de mesure (3, 4) des composantes dudit vecteur gravité $\vec{g}$, fixé audit équipement (2); et en ce que ledit véhicule (1) porte:
    - un magnétomètre d'équipement (11), fixé audit véhicule (1), dont l'orientation, par rapport audit premier système de référence (RM) absolu, est repérée par un quatrième système de référence (R4);
    - un calculateur (6);
    - une mémoire (7) associée audit calculateur (6); et
    - une première liaison (5) reliant ledit équipement (2) et le magnétomètre d'équipement (11) audit calculateur (6) et à ladite mémoire (7).

12. Système selon la revendication 11, caractérisé en ce qu'au moins l'outillage (8) ou au moins un équipement (2) fournit, de plus, des données relatives à la vitesse et / ou à l'accélération dudit véhicule (1).

**Claims**

1. Method for harmonizing an equipment (2) relative to a vehicle (1), the said equipment (2) being installed fixedly on board the said vehicle (1) which, relative to a first absolute reference system (RM), has an orientation defined by a second reference system (R2) tied to the said vehicle (1), the said equipment (2) being subjected to the earth's gravitational field represented by a gravity vector $\vec{g}$ oriented along its gradient, as well as to the earth's magnetic field represented by a vector $\vec{H}$ oriented along its gradient, and the orientation of the said equipment (2) being defined, relative to the said first absolute reference system (RM), by a third reference system (R3), this equipment (2) comprising a device (3, 4) for measuring the components of the said gravity vector $\vec{g}$, fixed to the said equipment (2); and the said vehicle (1) carrying:
    - a computer (6);
    - a memory (7) associated with the said computer (6);
    - an equipment magnetometer (11), fixed to the said vehicle (1), whose orientation, relative to the said first absolute reference system (RM), is referenced by a fourth ref-erence system (R4); and
    - a first link (5) connecting the said equipment (2) and the equipment magnetometer (11) to the said computer (6) and to the said memory (7),
        characterized in that it comprises the first series of following steps:
    - there is disposed, fixedly on board the vehicle (1), an appliance (8) harmonized relative to the latter, comparable to the said equipment (2), as well as a utility magnetometer (10) harmonized relative to the said appliance (8), the said appliance (8) and the said utility magnetometer (10) being connected to the said computer (6) and to the said memory (7) by a second link (9);

- the vehicle (1) is placed in a first fixed position relative to the ground, corresponding to a first positioning (R21) of the said second reference system (R2) relative to the said first absolute reference system (RM);

- there are measured, with the appliance (8), the values of the components of a vector $\vec{g}1$, representing the earth's gravitational field $\vec{g}$ sensed by the appliance (8) in the second reference system (R2), and the said values are transformed into reference gravitational data indicative of the said values measured by the appliance (8);

- there are measured, with the said utility magnetometer (10), the values of the components of a vector $\vec{H}1$, representing the earth's magnetic field $\vec{H}$ sensed by this utility magnetometer (10) in the second reference system (R2), and the said values are transformed into reference magnetic data indicative of the said values measured by the utility magnetometer (10);

- the said reference gravitational data, indicative of the said values measured by the appliance (8), as well as the said reference magnetic data, indicative of the said values measured by the utility magnetometer (10), are transmitted to the memory (7), via the said second link (9) connecting the appliance (8) to the said memory (7), and stored therein;

- with the said equipment (2), are measured the values of the components of a vector $\vec{g}2$, representing the earth's gravitational field $\vec{g}$ sensed by the said equipment (2) in the third reference system (R3), and the said values are transformed into measured gravitational data indicative of the said values measured by the said equipment (2);

- with the said equipment magnetometer (11), are measured the values of the components of a vector $\vec{H}2$, representing the earth's magnetic field $\vec{H}$ sensed by this equipment magnetometer (11) in the fourth reference system (R4), and the said values are transformed into measured magnetic data indicative of the said values measured by the equipment magnetometer (11);

- the said measured gravitational data indicative of the said values measured by the said equipment (2), as well as the said measured magnetic data, indicative of the said values measured by the equipment magnetometer (11), are transmitted to the memory (7) via the said first link (5), and stored therein;

- in the computer (6), from the said reference gravitational data, the said reference magnetic data, the said measured gravitational data, and the said measured magnetic data, a first rotation operator R1 ($\alpha$, $\beta$, $\Gamma$) is calculated, correcting, at least for the most part, the angular errors of harmonization between the second reference system (R2) of the said vehicle (1) and the third reference system (R3) of the said equipment (2) according to the relationships:

$$\alpha = \Phi1 - \Phi2$$
$$\beta = \theta1 - \theta2$$
$$\Gamma = \Omega1 - \Omega2 = 0$$

$\Phi1$, $\theta1$ and $\Omega1$ being respectively the angle of roll, the angle of pitch attitude and the angle of heading of the vehicle (1), which are determined by the computer (6) from the said reference gravitational data and from the said reference magnetic data,

and $\Phi2$, $\theta2$, and $\Omega2$ being respectively the angle of roll, the angle of pitch attitude and the angle of heading of the equipment (2), which are determined by the computer (6) from the said measured gravitational data and from the said measured magnetic data;

- the first rotation operator R1 ($\alpha$, $\beta$, $\Gamma$) is stored and is incorporated in the computer (6) which applies it to angles $\Phi2$, $\theta2$, $\Omega2$ determined subsequently from subsequent measurements, giving subsequent measured gravitational data indicative of subsequent values measured by the said equipment (2), as well as subsequent measured magnetic data indicative of subsequent values measured by the equipment magnetometer (11).

2. Method for harmonizing an equipment (2) relative to a vehicle (1), the said equipment (2) being installed fixedly on board the said vehicle (1) which, relative to a first absolute reference system (RM), has an orientation defined by a second reference system (R2) tied to the said vehicle (1), the said equipment (2) being subjected to the earth's gravitational field represented by a gravity vector $\vec{g}$ oriented along its gradient, as well as to the earth's magnetic field represented by a vector $\vec{H}$ oriented along its gradient, and the orientation of the said equipment (2) being defined, relative to the said first absolute reference system (RM), by a third reference system (R3), this equipment (2) comprising a device (3, 4) for measuring the components of the said gravity vector $\vec{g}$, fixed to the said equipment (2);

and the said vehicle (1) carrying:

- a computer (6);
- a memory (7) associated with the said computer (6);
- an equipment magnetometer (11), fixed to the said vehicle (1), whose orientation, relative to the said first absolute reference system (RM), is referenced by a fourth ref-erence system (R4); and
- a first link (5) connecting the said equipment (2) and the equipment magnetometer (11) to the said computer (6) and to the said memory (7),

    characterized in that it comprises the second series of following steps:

- there is disposed, fixedly on board the vehicle (1), an appliance (8) harmonized relative to the latter, comparable to the said equipment (2), as well as a utility magnetometer (10) harmonized relative to the said appliance (8), the said appliance (8) and the said utility magnetometer (10) being connected to the said computer (6) and to the said memory (7) by a second link (9);
- the vehicle (1) is placed in a first fixed position relative to the ground, corresponding to a first positioning (R21) of the said second reference system (R2) relative to the said first absolute reference system (RM);
- there are measured, with the appliance (8), the values of the components of a vector $\vec{g}1$, representing the earth's gravitational field $\vec{g}$ sensed by the appliance (8) in the second reference system (R2), and the said values are transformed into reference gravitational data indicative of the said values measured by the appliance (8);
- there are measured, with the said utility magnetometer (10), the values of the components of a vector $\vec{H}1$, representing the earth's magnetic field $\vec{H}$ sensed by this utility magnetometer (10) in the second reference system (R2), and the said values are transformed into reference magnetic data indicative of the said values measured by the utility magnetometer (10);
- the said reference gravitational data, indicative of the said values measured by the appliance (8), as well as the said reference magnetic data, indicative of the said values measured by the utility magnetometer (10), are transmitted to the memory (7), via the said second link (9) connecting the appliance (8) to the said memory (7), and stored therein;
- with the said equipment (2), are measured the values of the components of a vector $\vec{g}2$, representing the earth's gravitational field $\vec{g}$ sensed by the said equipment (2) in the third reference system (R3), and the said values are transformed into measured gravitational data indicative of the said values measured by the said equipment (2);
- with the said equipment magnetometer (11), are measured the values of the components of a vector $\vec{H}2$, representing the earth's magnetic field $\vec{H}$ sensed by this equipment magnetometer (11) in the fourth reference system (R4), and the said values are transformed into measured magnetic data indicative of the said values measured by the equipment magnetometer (11);
- the said measured gravitational data indicative of the said values measured by the said equipment (2), as well as the said measured magnetic data, indicative of the said values measured by the equipment magnetometer (11), are transmitted to the memory (7) via the said first link (5), and stored therein;
- in the computer (6), from the said reference gravitational data, the said reference magnetic data, the said measured gravitational data, and the said measured magnetic data, a first rotation operator R1 ($\alpha$, $\beta$, $\Gamma$) is calculated, correcting, at least for the most part, the angular errors of harmonization between the second reference system (R2) of the said vehicle (1) and the third reference system (R3) of the said equipment (2) according to the relationship:

$$\begin{vmatrix} \vec{g}1 \\ \vec{H}1 \end{vmatrix} = \begin{vmatrix} R1(\alpha,\beta,\Gamma) & 0 \\ 0 & R1(\alpha,\beta,\Gamma) \end{vmatrix} \times \begin{vmatrix} \vec{g}2 \\ \vec{H}2 \end{vmatrix}$$

- the first rotation operator R1 ($\alpha$, $\beta$, $\Gamma$) is stored and is incorporated in the computer (6) which applies it to angles $\Phi2$, $\theta2$, $\Omega2$ determined subsequently from subsequent measurements, giving subsequent measured gravitational data indicative of subsequent values measured by the said equipment (2), as well as subsequent measured magnetic data indicative of subsequent values measured by the equipment magnetometer (11).

- the angles $\phi1$, $\theta1$, $\Omega1$, on the one hand, and the angles $\Phi2$, $\theta2$, $\Omega2$, on the other hand, $\Phi1$, $\theta1$, $\Omega1$ being respectively the angle of roll, the angle of pitch attitude and the angle of heading of the vehicle (1), which are determined by the computer (6) from the said reference grativational data and from the said reference magnetic data, and $\Phi2$, $\theta2$ and $\Omega2$ being respectively the angle of roll, the angle of pitch attitude and the angle of heading of the equipment (2), which are determined by the computer (6) from the said measured gravitational data and from the said measured magnetic data, are stored.

3. Method according to Claim 1 or 2, characterized in that the said first or second series of steps is followed by a third series of steps comprising the following steps:
   - the vehicle (1) is set into non-rectilinear motion;
   - a plurality of values of the components of the magnetic field $\vec{H}2$ sensed by the equipment magnetometer (11) according to the fourth reference system (R4), with differing orientations of the vehicle (1), are measured at various instants and stored in the memory (7);
   - in the computer (6), from the said plurality of values of the components of the magnetic field $\vec{H}2$ sensed by the equipment magnetometer (11) and measured in the preceding step, a corrective operator (OC) is calculated defining the corrections to be applied to the components of the various magnetic field vectors $\vec{H}2$ measured in all the preceding steps by the equipment magnetometer (11), in order to correct the hard iron and soft iron magnetic perturbations and the orientation error between the third reference system (R3) of the said equipment (2) and the fourth reference system (R4) of the said equipment magnetometer (11);
   - by application of the said corrective operator (OC), the components of the various magnetic field vectors $\vec{H}2$ measured in all the preceding steps by the equipment magnetometer (11), are transformed into corrected magnetic field vector components $\vec{H}2c$, replacing, for the subsequent calculations, the components of the correspondding magnetic field vectors $\vec{H}2$;
   - in the computer (6), from the said reference gravitational data, the said reference magnetic data, the said measured gravitational data, and the said measured magnetic data, corresponding to the measurements made on the ground, and for which the components of the magnetic field vector $\vec{H}2$ representing the magnetic field sensed by the said equipment magnetometer (11) are replaced by the components of the corrected magnetic vector $\vec{H}2c$, the error angles $\alpha$, $\beta$, $\Gamma$ are calculated defining a second rotation operator R2 ($\alpha$, $\beta$, $\Gamma$) between the second reference system (R2) of the said vehicle (1) and the third reference system (R3) of the said equipment (2), the angles $\alpha$, $\beta$, $\Gamma$ being solutions of the system of equations:

$$\begin{vmatrix} \vec{g1} \\ \vec{H1} \end{vmatrix} = \begin{vmatrix} R2(\alpha,\beta,\Gamma) & 0 \\ 0 & R2(\alpha,\beta,\Gamma) \end{vmatrix} \times \begin{vmatrix} \vec{g2} \\ \vec{H2c} \end{vmatrix}$$

   - this second rotation operator R2 ($\alpha$, $\beta$, $\Gamma$) is stored and is incorporated in the computer (6) which applies it to angles $\Phi2$, $\theta2$, $\Omega2$ determined subsequently from subsequent measurements, giving subsequent measured gravitational data indicative of subsequent values measured by the said equipment (2), as well as subsequent measured magnetic data indicative of subsequent values measured by the equipment magnetometer (11).

4. Method according to Claim 3, characterized in that the said reference gravitational data and the said reference magnetic data, on the one hand, the said measured gravitational data and the said measured magnetic data, on the other hand, corresponding to the measurements made on the ground, are respectively representative of the angles $\Phi1$, $\theta1$, $\Omega1$, on the one hand, and $\Phi2$, $\theta2$, $\Omega2$, on the other hand.

5. Method according to any one of Claims 1 to 4, applied to a plurality of M (M: positive integer) equipments (2) to be harmonized relative to the said vehicle (1), each having first and second rotation operators R1 ($\alpha i$, $\beta i$, $\Gamma i$) and R2 ($\alpha i$, $\beta i$, $\Gamma i$) as well as a characteristic corrective operator (OCi) (with i = 1 to M), characterized in that the plurality of first and second rotation operators R1 ($\alpha i$, $\beta i$, $\Gamma i$), R2 ($\alpha i$, $\beta i$, $\Gamma i$) and of corrective operators (OCi) is determined simultaneously, from measurements made by the various

EP 0 502 771 B1

equipments (2) and equipment magnetometers (11) and by an appliance (8) and a utility magnetometer (10).

6. Method according to Claim 4, characterized in that there is a single memory (7).

7. Method according to Claim 4 or 5, characterized in that there is a single computer (6).

8. Method according to any one of Claims 1 to 7, characterized in that:
   - with the said equipment (2), the said equipment magnetometer (11), the said appliance (8) and the said utility magnetometer (10), data relating to the supplementary ground orientations of the vehicle (1) are measured on the ground, supplementing the homologous data relating to the initial ground orientation;
   - the said data relating to the collection of orientations of the vehicle (1) on the ground and in flight are transmitted to the computer (6);
   - in the computer (6), a third rotation operator R3 ($\alpha$, $\beta$, $\Gamma$) is calculated, used, instead of the said second rotation operator R2 ($\alpha$, $\beta$, $\Gamma$), to correct the errors of harmonization of the equipment(s) (2).

9. Method according to any one of Claims 1 to 8, characterized in that the appliance (8) consists of the instrument of the type of the equipment (2) of highest performance.

10. Method according to any one of Claims 1 to 9, characterized in that use is made moreover of the data output by the appliance (8) or by at least one equipment (2), and relating to the speed and/or the acceleration of the said vehicle (1).

11. System for harmonizing an equipment (2) relative to a vehicle (1), the said equipment (2) being installed fixedly on board the said vehicle (1) which, relative to a first absolute reference system (RM), has an orientation defined by a second reference system (R2) tied to the said vehicle (1), the said equipment (2) being subjected to the earth's gravitational field represented by a gravity vector $\vec{g}$ oriented along its gradient, as well as to the earth's magnetic field represented by a vector $\vec{H}$ oriented along its gradient, and the orientation of the said equipment (2) being defined, relative to the said first absolute reference system (RM), by a third reference system (R3), characterized in that the said equipment (2) comprises a device (3, 4) for measuring the components of the said gravity vector $\vec{g}$, fixed to the said equipment (2); and in that the said vehicle (1) carries:
    - an equipment magnetometer (11), fixed to the said vehicle (1), whose orientation, relative to the said first absolute reference system (RM), is referenced by a fourth reference system (R4);
    - a computer (6);
    - a memory (7) associated with the said computer (6); and
    - a first link (5) connecting the said equipment (2) and the equipment magnetometer (11) to the said computer (6) and to the said memory (7).

12. System according to Claim 11, characterized in that at least the appliance (8) or at least one equipment (2) provides, moreover, data relating to the speed and/or the acceleration of the said vehicle (1).

**Patentansprüche**

1. Verfahren zur Abstimmung einer Einrichtung (2) gegenüber einem Fahrzeug (1), wobei die Einrichtung (2) fest an Bord des Fahrzeugs (1) installiert ist, das gegenüber einem ersten absoluten Bezugssystem (RM) eine durch ein zweites mit dem Fahrzeug (1) verbundenes Bezugssystem (R2) definierte Ausrichtung aufweist, die Einrichtung (2) dem Schwerefeld der Erde, das durch einen auf seinen Gradienten ausgerichteten Schwerevektor $\vec{g}$ dargestellt wird, sowie dem Magnetfeld der Erde unterliegt, das durch einen auf seinen Gradienten ausgerichteten Vektor $\vec{H}$ dargestellt wird, und die Ausrichtung der Einrichtung (2) gegenüber dem ersten absoluten Bezugssystem (RM) durch ein drittes Bezugssystem (R3) definiert wird, die Einrichtung (2) eine Vorrichtung (3,4) zur Messung der Komponenten des Schwerevektors $\vec{g}$ umfaßt, die an der Einrichtung (2) befestigt ist, und das Fahrzeug (1) umfaßt:
   - einen Rechner (6);
   - einen dem Rechner (6) zugeordneten Speicher (7);

20

- ein Einrichtungsmagnetometer (11), das am Fahrzeug (1) befestigt ist und dessen Ausrichtung gegenüber dem ersten absoluten Bezugssystem (RM) durch ein viertes Bezugssystem (R4) bestimmt wird; und
- eine erste Verbindung (5), durch die die Einrichtung (2) und das Einrichtungsmagnetometer (11) mit dem Rechner (6) und dem Speicher (7) verbunden werden,
  dadurch gekennzeichnet, daß es die erste Reihe folgender Stufen umfaßt:
- an Bord des Fahrzeugs (1) werden fest ein gegenüber demselben abgestimmtes Arbeitsmittel (8), das mit der Einrichtung (2) verglichen werden kann, sowie ein gegenüber dem Arbeitsmittel (8) abgestimmtes Arbeitsmagnetometer (10) angebracht, wobei das Arbeitsmittel (8) und das Arbeitsmagnetometer (10) mit dem Rechner (6) und dem Speicher (7) durch eine zweite Leitung (9) verbunden sind;
- das Fahrzeug (1) wird in eine erste bodenfeste Lage gebracht, die einer ersten Positionierung (R21) des zweiten Bezugssystems (R2) gegenüber dem ersten absoluten Bezugssystem (RM) entspricht;
- mit dem Arbeitsmittel (8) werden die Werte der Komponenten eines Vektors $\vec{g}1$, der das vom Arbeitsmittel (8) im zweiten Bezugssystem (R2) erfaßte Schwerefeld der Erde $\vec{g}$ darstellt, gemessen und in Schwere-Bezugsdaten umgewandelt, die für die Meßwerte von Arbeitsmittel (8) signifikant sind;
- mit dem Arbeitsmagnetometer (10) werden die Werte der Komponenten eines Vektors $\vec{H}1$, der das von diesem Arbeitsmagnetometer (10) im zweiten Bezugssystem (R2) erfaßte Magnetfeld der Erde $\vec{H}$ darstellt, gemessen und in Magnetismus-Bezugsdaten umgewandelt, die für die Meßwerte von Arbeitsmagnetometer (10) signifikant sind;
- an Speicher (7) werden zur Speicherung über die zweite Verbindung (9) zwischen Arbeitsmittel (8) und Speicher (7) die Schwere-Bezugsdaten, die für die Meßwerte von Arbeitsmittel (8) signifikant sind, sowie die Magnetismus-Bezugsdaten, die für die Meßwerte von Arbeitsmagnetometer (10) signifikant sind, gegeben;
- mit Einrichtung (2) werden die Werte der Komponenten eines Vektors $\vec{g}2$, der das von Einrichtung (2) im dritten Bezugssystem (R3) erfaßte Schwerefeld der Erde $\vec{g}$ darstellt, gemessen und in SchwereMeßdaten umgewandelt, die für die Meßwerte von Einrichtung (2) signifikant sind;
- mit dem Einrichtungsmagnetometer (11) werden die Werte der Komponenten eines Vektors $\vec{H}2$, der das von diesem Einrichtungsmagnetometer (11) im vierten Bezugssystem (R4) erfaßte Magnetfeld der Erde $\vec{H}$ darstellt, gemessen und in Magnetismus-Meßdaten umgewandelt, die für die Meßwerte von Einrichtungsmagnetometer (11) signifikant sind;
- an Speicher (7) werden zur Speicherung über die erste Verbindung (5) die Schwere-Meßdaten, die für die Meßwerte von Einrichtung (2) signifikant sind, sowie die Magnetismus-Meßdaten, die für die Meßwerte von Einrichtungsmagnetometer (11) signifikant sind, gegeben;
- mit Rechner (6) wird aus den Schwere-Bezugsdaten, den Magnetismus-Bezugsdaten, den Schwere-Meßdaten sowie den Magnetismus-Meßdaten ein erster Rotationsoperator R1($\alpha,\beta,\Gamma$) errechnet, mit dem zumindest der größere Teil der Abstimmungswinkelfehler zwischen dem zweiten Bezugssystem (R2) von Fahrzeug (1) und dem dritten Bezugssystem (R3) von Einrichtung (2) nach den Beziehungen:

$$\alpha = \Phi1 - \Phi2$$
$$\beta = \theta1 - \theta2$$
$$\Gamma = \Omega1 - \Omega2 = 0$$

korrigiert wird, wobei $\Phi1$, $\theta1$ und $\Omega1$ der Rollwinkel, der Trimmwinkel bzw. der Kurswinkel von Fahrzeug (1), die von Rechner (6) aus den Schwere-Bezugsdaten und den Magnetismus-Bezugsdaten ermittelt wurden,
und $\Phi2$, $\theta2$ und $\Omega2$ der Rollwinkel, der Trimmwinkel bzw. der Kurswinkel von Einrichtung (2) sind, die von Rechner (6) aus den Schwere-Meßdaten und den Magnetismus-Meßdaten ermittelt wurden;
- der erste Rotationsoperator R1($\alpha,\beta,\Gamma$) wird gespeichert und an Rechner (6) gegeben, der diesen auf Winkel $\Phi2$, $\theta2$ und $\Omega2$ anwendet, die nachfolgend aus nachfolgenden Messungen bestimmt werden, die nachfolgende Schwere-Meßdaten, die für nachfolgende Meßwerte von Einrichtung (2) signififkant sind, sowie nachfolgende Magnetismus-Meßdaten, die für nachfolgende Meßwerte von Einrichtungsmagnetometer (11) signifikant sind, ergeben.

**2.** Verfahren zur Abstimmung einer Einrichtung (2) gegenüber einem Fahrzeug (1), wobei die Einrichtung (2) fest an Bord des Fahrzeugs (1) installiert ist, das gegenüber einem ersten absoluten Bezugssystem (RM) eine Ausrichtung aufweist, die durch ein zweites mit Fahrzeug (1) verbundenes Bezugssystem (R2) bestimmt wird, wobei die Einrichtung (2) dem Schwerefeld der Erde, das durch einen nach seinem Gradienten ausgerichteten Schwerevektor $\vec{g}$ dargestellt wird, sowie dem Magnetfeld der Erde unterliegt, das durch einen nach seinem Gradienten ausgerichteten Vektor $\vec{H}$ dargestellt wird, und die Ausrichtung von Einrichtung (2) gegenüber dem ersten absoluten Bezugssystem (RM) durch ein drittes Bezugssystem (R3) bestimmt wird und Einrichtung (2) eine an Einrichtung (2) befestigte Vorrichtung (3,4) zur Messung der Komponenten von Schwerevektor $\vec{g}$ hat,

und das Fahrzeug (1) umfaßt:

- einen Rechner (6);
- einen dem Rechner (6) zugeordneten Speicher (7);
- ein an Fahrzeug (1) befestigtes Einrichtungsmagnetometer (11), dessen Ausrichtung gegenüber dem ersten absoluten Bezugssystem (RM) durch ein viertes Bezugssystem (R4) bestimmt wird; und
- eine erste Verbindung (5), durch die Einrichtung (2) und Einrichtungsmagnetometer (11) mit Rechner (6) und Speicher (7) verbunden werden, dadurch gekennzeichnet, daß es die zweite Reihe folgender Stufen umfaßt:
- an Bord von Fahrzeug (1) werden fest ein gegenüber demselben abgestimmtes Arbeitsmittel (8), das mit Einrichtung (2) verglichen werden kann, sowie ein gegenüber Arbeitsmittel (8) abgestimmtes Arbeitsmagnetometer (10) angeordnet, wobei Arbeitsmittel (8) und Arbeitsmagnetometer (10) mit Rechner (6) und Speicher (7) durch eine zweite Verbindung (9) verbunden sind;
- das Fahrzeug (1) wird in eine erste bodenfeste Lage gebracht, die einer ersten Positionierung (R21) des zweiten Bezugssystems (R2) gegenüber dem ersten absoluten Bezugssystem (RM) entspricht;
- mit dem Arbeitsmittel (8) werden die Werte der Komponenten eines Vektors $\vec{g}1$, der das von Arbeitsmittel (8) im zweiten Bezugssystem (R2) erfaßte Schwerefeld der Erde $\vec{g}$ darstellt, gemessen und in Schwere-Bezugsdaten, die für die Meßwerte von Arbeitsmittel (8) signifikant sind, umgewandelt;
- mit dem Arbeitsmagnetometer (10) werden die Werte der Komponenten eines Vektors $\vec{H}1$, der das von diesem Arbeitsmagnetometer (10) im zweiten Bezugssystem (R2) erfaßte Magnetfeld der Erde $\vec{H}$ darstellt, gemessen und in Magnetismus-Bezugsdaten umgewandelt, die für die Meßwerte von Arbeitsmagnetometer (10) signifikant sind;
- an Speicher (7) werden zur Speicherung über die zweite Verbindung (9) zwischen Arbeitsmittel (8) und Speicher (7) die Schwere-Bezugsdaten, die für die Meßwerte von Arbeitsmittel (8) signifikant sind, sowie die Magnetismus-Bezugsdaten, die für die Meßwerte von Arbeitsmagnetometer (10) signifikant sind, gegeben;
- mit Einrichtung (2) werden die Werte der Komponenten eines Vektors $\vec{g}2$, der das von Einrichtung (2) im dritten Bezugssystem (R3) erfaßte Schwerefeld der Erde $\vec{g}$ darstellt, gemessen und in Schwere-Meßdaten, die für die Meßwerte von Einrichtung (2) signifikant sind, umgewandelt;
- mit dem Einrichtungsmagnetometer (11) werden die Werte der Komponenten eines Vektors $\vec{H}2$, der das von diesem Einrichtungsmagnetometer (11) im vierten Bezugssystem (R4) erfaßte Magnetfeld der Erde $\vec{H}$ darstellt, gemessen und in Magnetismus-Meßdaten, die für die Meßwerte von Einrichtungsmagnetometer (11) signifikant sind, umgewandelt;
- an Speicher (7) werden zur Speicherung über die erste Verbindung (5) die Schwere-Meßdaten, die für die Meßwerte von Einrichtung (2) signifikant sind, sowie die Magnetismus-Meßdaten, die für die Meßwerte von Einrichtungsmagnetometer (11) signifikant sind, gegeben;
- mit Rechner (6) wird aus den Schwere-Bezugsdaten, den Magnetismus-Bezugsdaten, den Schwere-Meßdaten sowie den Magnetismus-Meßdaten ein erster Rotationsoperator $R1(\alpha,\beta,\Gamma)$ errechnet, mit dem zumindest der größere Teil der Abstimmungswinkelfehler zwischen dem zweiten Bezugssystem (R2) von Fahrzeug (1) und dem dritten Bezugssystem (R3) von Einrichtung (2) nach der Beziehung:

$$\left| \begin{array}{c} \vec{g}1 \\ \vec{H}1 \end{array} \right| = \left| \begin{array}{cc} R1(\alpha,\beta,\Gamma) & 0 \\ 0 & R1(\alpha,\beta,\Gamma) \end{array} \right| \quad x \quad \left| \begin{array}{c} \vec{g}2 \\ \vec{H}2 \end{array} \right|$$

korrigiert wird;

- der erste Rotationsoperator R1($\alpha,\beta,\Gamma$) wird gespeichert und an Rechner (6) gegeben, der diesen auf Winkel $\Phi2$, $\theta2$ und $\Omega2$ anwendet, die nachfolgend aus nachfolgenden Messungen bestimmt werden, die nachfolgende Schwere-Meßdaten, die für nachfolgende Meßwerte von Einrichtung (2) signifikant sind, sowie nachfolgende Magnetismus-Meßdaten, die für nachfolgende Meßwerte von Einrichtungsmagnetometer (11) signifikant sind, ergeben;
- es werden einerseits die Winkel $\Phi1$, $\theta1$ und $\Omega1$ und andererseits die Winkel $\Phi2$, $\theta2$ und $\Omega2$ gespeichert, wobei $\Phi1$, $\theta1$ und $\Omega1$ der Rollwinkel, der Trimmwinkel bzw. der Kurswinkel von Fahrzeug (1), die von Rechner (6) aus den Schwere-Bezugsdaten und den Magnetismus-Bezugsdaten ermittelt wurden, und $\Phi2$, $\theta2$ und $\Omega2$ der Rollwinkel, der Trimmwinkel bzw. der Kurswinkel von Einrichtung (2) sind, die von Rechner (6) aus den Schwere-Meßdaten und den Magnetismus-Meßdaten ermittelt wurden.

3. Verfahren nach Anspruch 1 oder 2, dadurch gekennzeichnet, daß der ersten oder zweiten Stufenreihe eine dritte Stufenreihe mit nachstehenden Stufen folgt:
- Fahrzeug (1) wird in eine nicht geradlinige Bewegung gebracht;
- zu unterschiedlichen Zeitpunkten wird eine Vielzahl von Werten der Komponenten des von Einrichtungsmagnetometer (11) entsprechend dem vierten Bezugssystem (R4) erfaßten Magnetfeldes $\vec{H}2$ bei unterschiedlichen Ausrichtungen von Fahrzeug (1) gemessen und in Speicher (7) gespeichert;
- mit Rechner (6) wird aus der in der vorangegangenen Stufe gemessenen Wertevielzahl für die Komponenten des von Einrichtungsmagnetometer (11) erfaßten Magnetfeldes $\vec{H}2$ ein Korrekturoperator (OC) errechnet, mit dem die Korrekturen für die Komponenten der verschiedenen Magnetfeldvektoren $\vec{H}2$, die in allen vorangegangenen Stufen mit Einrichtungsmagnetometer (11) gemessen wurden, definiert und die magnetischen Störungen durch Hart- und Weicheisenteile sowie der Ausrichtungsfehler zwischen dem dritten Bezugssystem (R3) von Einrichtung (2) und dem vierten Bezugssystem (R4) von Einrichtungsmagnetometer (11) berichtigt werden;
- durch Anwendung des Korrekturoperators (OC) werden die in allen vorangegangenen Stufen mit dem Einrichtungsmagnetometer (11) gemessenen Komponenten der verschiedenen Magnetfeldvektoren $\vec{H}2$ in korrigierte Komponenten von Magnetfeldvektoren $\vec{H}2c$ umgewandelt, durch die bei den nachfolgenden Berechnungen die Komponenten der entsprechenden Magnetfeldvektoren $\vec{H}2$ ersetzt werden;
- mit Rechner (6) werden aus den Schwere-Bezugsdaten, den Magnetismus-Bezugsdaten, den Schwere-Meßdaten sowie den Magnetismus-Meßdaten für die Bodenmessungen, bei denen die Komponenten des Magnetfeldvektors $\vec{H}2$, der das von Einrichtungsmagnetometer (11) erfaßte Magnetfeld darstellt, durch die Komponenten des korrigierten Magnetvektors $\vec{H}2c$ ersetzt wurden, die Fehlerwinkel $\alpha$, $\beta$, $\Gamma$ errechnet, durch die ein zweiter Rotationsoperator R2($\alpha,\beta,\Gamma$) zwischen dem zweiten Bezugssystem (R2) von Fahrzeug (1) und dem dritten Bezugssystem (R3) von Einrichtung (2) definiert wird, wobei die Winkel $\alpha$, $\beta$, $\Gamma$ die Lösungen des Gleichungssystems:

$$\left| \begin{array}{c} \vec{g}1 \\ \vec{H}1 \end{array} \right| = \left| \begin{array}{cc} R2(\alpha,\beta,\Gamma) & 0 \\ 0 & R2(\alpha,\beta,\Gamma) \end{array} \right| \quad x \quad \left| \begin{array}{c} \vec{g}2 \\ \vec{H}2c \end{array} \right|$$

darstellen;
- dieser zweite Rotationsoperator R2($\alpha,\beta,\Gamma$) wird gespeichert und an Rechner (6) gegeben, der ihn auf Winkel $\Phi2$, $\theta2$ und $\Omega2$ anwendet, die nachfolgend aus nachfolgenden Messungen bestimmt werden, die nachfolgende Schwere-Meßdaten, die für nachfolgende Meßwerte von Einrichtung (2) signifikant sind, sowie nachfolgende Magnetismus-Meßdaten, die für nachfolgende Meßwerte von Einrichtungsmagnetometer (11) signifikant sind, ergeben.

EP 0 502 771 B1

4. Verfahren nach Anspruch 3, dadurch gekennzeichnet, daß die Schwere-Bezugsdaten und die Magnetismus-Bezugsdaten bzw. die Schwere-Meßdaten und die Magnetismus-Meßdaten der Bodenmessungen für die Winkel $\Phi 1$, $\theta 1$, $\Omega 1$ bzw. $\Phi 2$, $\theta 2$, $\Omega 2$ repräsentativ sind.

5. Verfahren nach einem der Ansprüche 1 bis 4, angewandt auf eine Vielzahl von M (M - positive ganze Zahl) gegenüber Fahrzeug (1) abzustimmenden Einrichtungen (2), wobei jede eigene erste und zweite Rotationsoperatoren R1($\alpha i,\beta i,\Gamma i$) und R2($\alpha i,\beta i,\Gamma i$) sowie einen eigenen Korrekturoperator (OCi) (mit i = 1 bis M) hat, dadurch gekennzeichnet, daß die Vielzahl von ersten und zweiten Rotationsoperatoren R1-($\alpha i,\beta i,\Gamma i$), R2($\alpha i,\beta i,\Gamma i$) und Korrekturoperatoren (OCi) gleichzeitig aus Messungen bestimmt wird, die mit den verschiedenen Einrichtungen (2) und Einrichtungsmagnetometern (11) und mit einem Arbeitsmittel (8) und einem Arbeitsmagnetometer (10) durchgeführt werden.

6. Verfahren nach Anspruch 4, dadurch gekennzeichnet, daß es sich bei Speicher (7) um einen einzigen handelt.

7. Verfahren nach Anspruch 4 oder 5, dadurch gekennzeichnet, daß es sich bei Rechner (6) um einen einzigen handelt.

8. Verfahren nach einem der Ansprüche 1 bis 7, dadurch gekennzeichnet, daß:
   - durch Bodenmessung mit Einrichtung (2), Einrichtungsmagnetometer (11), Arbeitsmittel (8) und Arbeitsmagnetometer (10) Daten für zusätzliche Bodenausrichtungen des Fahrzeugs (1) ermittelt werden, durch die die entsprechenden Daten für die anfängliche Bodenausrichtung ergänzt werden;
   - an Rechner (6) die Daten für alle Ausrichtungen von Fahrzeug (1) am Boden und in der Luft übertragen werden;
   - mit Rechner (6) ein dritter Rotationsoperator R3($\alpha,\beta,\Gamma$) errechnet wird, der anstelle des zweiten Rotationsoperators R2($\alpha,\beta,\Gamma$) dazu dient, die Abstimmfehler der Einrichtung(en) (2) zu korrigieren.

9. Verfahren nach einem der Ansprüche 1 bis 8, dadurch gekennzeichnet, daß das Arbeitsmittel (8) aus dem leistungsfähigsten Gerät in der Art von Einrichtung (2) besteht.

10. Verfahren nach einem der Ansprüche 1 bis 9, dadurch gekennzeichnet, daß außerdem Daten für Geschwindigkeit und/oder Beschleunigung von Fahrzeug (1) aus Arbeitsmittel (8) oder aus mindestens einer Einrichtung (2) genutzt werden.

11. System zur Abstimmung einer Einrichtung (2) gegenüber einem Fahrzeug (1), wobei die Einrichtung (2) fest an Bord von Fahrzeug (1) installiert ist, das gegenüber einem ersten absoluten Bezugssystem (RM) eine durch ein mit Fahrzeug (1) verbundenes zweites Bezugssystem (R2) definierte Ausrichtung aufweist, wobei Einrichtung (2) dem Schwerefeld der Erde, das durch einen nach seinem Gradienten ausgerichteten Schwerevektor $\vec{g}$ dargestellt wird, sowie dem Magnetfeld der Erde ausgesetzt ist, das durch einen nach seinem Gradienten ausgerichteten Vektor $\vec{H}$ dargestellt wird, und die Ausrichtung von Einrichtung (2) gegenüber dem ersten absoluten Bezugssystem (RM) durch ein drittes Bezugssystem (R3) definiert wird, dadurch gekennzeichnet, daß Einrichtung (2) eine Vorrichtung (3,4) zur Messung der Komponenten des Schwerevektors $\vec{g}$ hat, die an Einrichtung (2) befestigt ist; und dadurch, daß das Fahrzeug (1) umfaßt:
   - ein Einrichtungsmagnetometer (11), das an Fahrzeug (1) befestigt ist und dessen Ausrichtung gegenüber dem ersten absoluten Bezugssystem (RM) durch ein viertes Bezugssystem (R4) bestimmt wird;
   - einen Rechner (6);
   - einen dem Rechner (6) zugeordneten Speicher (7) und
   - eine erste Verbindung (5), durch die Einrichtung (2) und Einrichtungsmagnetometer (11) mit Rechner (6) und Speicher (7) verbunden werden.

12. System nach Anspruch 11, dadurch gekennzeichnet, daß mindestens das Arbeitsmittel (8) oder mindestens eine Einrichtung (2) außerdem Daten für Geschwindigkeit und/oder Beschleunigung von Fahrzeug (1) abgeben.

24

**FIG.1**

EP 0 502 771 B1

FIG. 2

# FIG.3

EP 0 502 771 B1